(19) Europäisches Patentamt
European Patent Office
Office européen des brevets

(11) **EP 4 557 788 A1**

(12) **EUROPEAN PATENT APPLICATION**
published in accordance with Art. 153(4) EPC

(43) Date of publication:
**21.05.2025 Bulletin 2025/21**

(21) Application number: **23851485.5**

(22) Date of filing: **30.06.2023**

(51) International Patent Classification (IPC):
**H04W 8/24** (2009.01)    **H04W 72/12** (2023.01)

(52) Cooperative Patent Classification (CPC):
**H04W 8/24; H04W 72/12**

(86) International application number:
**PCT/CN2023/104972**

(87) International publication number:
**WO 2024/032258 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022   CN 202210972078**

(71) Applicant: **Huawei Technologies Co., Ltd.
Shenzhen, Guangdong 518129 (CN)**

(72) Inventors:
• **FAN, Bo
Shenzhen, Guangdong 518129 (CN)**

• **YUAN, Shitong
Shenzhen, Guangdong 518129 (CN)**
• **LI, Fang
Shenzhen, Guangdong 518129 (CN)**
• **CHEN, Lei
Shenzhen, Guangdong 518129 (CN)**
• **LIU, Fengwei
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, APPARATUS AND SYSTEM**

(57) This application provides a communication method, apparatus, and system. The communication method includes: A terminal device sends first capability information to a network device, where the first capability information indicates a terminal transmission capability corresponding to at least one resource or resource group. The terminal device receives uplink transmission scheduling information sent by the network device, where the uplink transmission scheduling information is determined by the network device based on the first capability information. The terminal device performs uplink transmission based on the uplink transmission scheduling information. According to the method, the network device can obtain resource-level or resource group-level transmission capability information used by the terminal device for uplink transmission, so that the network device can jointly consider a terminal-level transmission capability limitation of the terminal device and a resource-level transmission capability limitation used for uplink transmission, and determine the uplink transmission scheduling information based on the terminal-level transmission capability limitation and the resource-level transmission capability limitation, to effectively avoid a problem of a transmission failure caused by scheduled uplink transmission exceeding a capability of the resource or resource group used by the terminal device.

FIG. 7

## Description

CROSS-REFERENCE TO RELATED APPLICATIONS

This application claims priority to Chinese Patent Application No. 202210972078.4, filed with the China National Intellectual Property Administration on August 12, 2022 and entitled "COMMUNICATION METHOD, APPARATUS, AND SYSTEM", which is incorporated herein by reference in its entirety.

TECHNICAL FIELD

This application relates to the field of communication technologies, and in particular, to a communication method, apparatus, and system.

BACKGROUND

Currently, in a communication transmission process, a network device needs to perform scheduling based on terminal capability information reported by a terminal device. For example, the network device may schedule the terminal device based on a quantity of supported transport streams and a quantity of supported codewords that are reported by the terminal device.

To effectively improve transmission quality, during uplink and downlink data transmission, the network device and the terminal device usually use one beam or a beam group for uplink transmission. When a beam group is used, the beam group may be located on different antenna panels (antenna panels). For example, uplink transmission is performed by using beams on a plurality of panels, and the beams may be used for simultaneous transmission or may be used for time division transmission. Alternatively, the beam group may be located on a same panel. In this case, the beams in the beam group can only be used for time division transmission.

However, during uplink transmission scheduling performed by the network device based on the terminal capability information currently reported by the terminal device, an uplink transmission beam or beam group used by the terminal device usually cannot support transmission scheduling of the network device, resulting in a high communication transmission failure rate.

In conclusion, currently, an efficient and more applicable communication transmission method is urgently needed.

SUMMARY

This application provides a communication method, apparatus, and system, to provide an efficient and more applicable communication transmission method, and effectively reduce a communication transmission failure rate.

According to a first aspect, an embodiment of this application provides a communication method, including:

A terminal device sends first capability information to a network device, where the first capability information indicates a terminal transmission capability corresponding to at least one resource or resource group. The terminal device receives uplink transmission scheduling information sent by the network device, where the uplink transmission scheduling information is determined by the network device based on the first capability information. The terminal device performs uplink transmission based on the uplink transmission scheduling information.

Based on the solution, in this embodiment of this application, the network device can obtain resource-level or resource group-level transmission capability information used by the terminal device for uplink transmission, so that during uplink transmission scheduling, the network device can jointly consider a terminal-level transmission capability limitation of the terminal device and a resource-level transmission capability limitation used for uplink transmission, and determine, based on the terminal-level transmission capability limitation and the resource-level transmission capability limitation, the uplink transmission scheduling information sent to the terminal device, to effectively avoid a problem of a transmission failure caused by scheduled uplink transmission exceeding a capability of the resource or resource group used by the terminal device.

In a possible implementation, the first capability information is carried in a measurement report sent by the terminal device to the network device, and the measurement report includes a measurement result of the at least one resource or resource group.

Based on the solution, this embodiment of this application provides a manner of transmitting the first capability information by the terminal device to the network device, to achieve higher applicability.

In a possible implementation, the at least one resource includes a first resource.

A terminal transmission capability corresponding to the first resource includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

**In** a possible implementation, the at least one resource group includes a first resource group.

A terminal transmission capability corresponding to the first resource group includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

Based on the solution, this embodiment of this application defines a plurality of types of resource-level or resource group-level transmission capability information, to achieve higher practicability.

In a possible implementation, the terminal device sends second capability information to the network device, where the second capability information indicates a transmission capability of the terminal device.

In a possible implementation, the second capability information includes one or more of the following: a maximum quantity of codewords that can be transmitted by the terminal device, whether the terminal device supports transmitting two codewords, whether the terminal device supports performing simultaneous transmission by using a plurality of beams, whether the terminal device can perform space division transmission by using a plurality of beams, whether the terminal device supports performing frequency division transmission by using a plurality of beams, an uplink transmission mode supported by the terminal device, and whether the terminal device supports performing transmission by using two timing advances.

Based on the solution, this embodiment of this application defines a plurality of types of terminal-level transmission capability information, to achieve higher practicability.

In a possible implementation, before the terminal device sends the first capability information to the network device, the terminal device sends first indication information to the network device, where the first indication information indicates that the terminal device supports reporting the first capability information.

In a possible implementation, the first indication information is included in the second capability information.

Based on the solution, this embodiment of this application provides a manner of transmitting the first indication information by the terminal device to the network device, to achieve higher applicability.

**In** a possible implementation, before the terminal device sends the first capability information to the network device, the terminal device receives the second capability information sent by the network device, where the second capability information indicates the terminal device to report the first capability information.

Based on the solution, in this embodiment of this application, before sending the first capability information to the network device, the terminal device further sends the second capability information to the terminal device, so that the network device can jointly determine the uplink transmission scheduling information with reference to the first capability information and the second capability information, to achieve higher practicability.

According to a second aspect, an embodiment of this application provides a communication method. The method includes:

A network device receives first capability information sent by a terminal device, where the first capability information indicates a terminal transmission capability corresponding to at least one resource or resource group. The network device determines uplink transmission scheduling information based on the first capability information. The network device sends the uplink transmission scheduling information to the terminal device. The network device receives an uplink signal transmitted by the terminal device based on the uplink transmission scheduling information.

Based on the solution, in this embodiment of this application, the network device can obtain resource-level or resource group-level transmission capability information used by the terminal device for uplink transmission, so that during uplink transmission scheduling, the network device can jointly consider a terminal-level transmission capability limitation of the terminal device and a resource-level transmission capability limitation used for uplink transmission, and determine, based on the terminal-level transmission capability limitation and the resource-level transmission capability limitation, the uplink transmission scheduling information sent to the terminal device, to effectively avoid a problem of a transmission failure caused by scheduled uplink transmission exceeding a capability of the resource or resource group used by the terminal device.

In a possible implementation, the first capability information is carried in a measurement report sent by the terminal device to the network device, and the measurement report further includes a measurement result of the at least one resource or resource group.

Based on the solution, this embodiment of this application provides a manner of transmitting the first capability information by the terminal device to the network device, to achieve higher applicability.

In a possible implementation, the at least one resource includes a first resource.

A terminal transmission capability corresponding to the first resource includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the at least one resource group includes a first resource group.

A terminal transmission capability corresponding to the first resource group includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

Based on the solution, this embodiment of this application defines a plurality of types of resource-level or resource group-level transmission capability information, to achieve higher practicability.

In a possible implementation, the network device receives second capability information sent by the terminal device, where the second capability information indicates a transmission capability of the terminal device.

In a possible implementation, the second capability information includes one or more of the following:

a maximum quantity of codewords that can be transmitted by the terminal device, whether the terminal device supports transmitting two codewords, whether the terminal device supports performing simultaneous transmission by using a plurality of beams, whether the terminal device can perform space division transmission by using a plurality of beams, whether the terminal device supports performing frequency division transmission by using a plurality of beams, an uplink transmission mode supported by the terminal device, whether the terminal device supports performing transmission by using two timing advances, and whether the terminal device supports reporting the first capability information.

Based on the solution, this embodiment of this application defines a plurality of types of terminal-level transmission capability information, to achieve higher practicability.

In a possible implementation, before the network device receives the first capability information sent by the terminal device, the network device receives first indication information sent by the terminal device, where the first indication information indicates that the terminal device supports reporting the first capability information.

In a possible implementation, the first indication information is included in the second capability information.

Based on the solution, this embodiment of this application provides a manner of transmitting the first indication information by the terminal device to the network device, to achieve higher applicability.

In a possible implementation, before the network device receives the first capability information sent by the terminal device,

the network device sends second indication information to the terminal device, where the second indication information indicates the terminal device to report the first capability information.

Based on the solution, in this embodiment of this application, the network device sends the second indication information to the terminal device. Therefore, before the terminal device that receives the second indication information reports the first capability information to the network device is triggered, the network device can jointly determine the uplink transmission scheduling information with reference to the first capability information and the second capability information, to achieve higher practicability.

In a possible implementation, when determining that a first condition is satisfied, the network device determines the uplink transmission scheduling information based on the first capability information.

The first condition includes one or a combination of the following:

the terminal device supports reporting the first capability information;
the network device configures the terminal device to report the first capability information;
the terminal device reports the first capability information; and
the first capability information includes a terminal transmission capability corresponding to an uplink transmission beam corresponding to the uplink transmission scheduling information.

Based on the solution, this embodiment of this application provides a plurality of first conditions, so that after determining that the first condition is satisfied, the network device determines the uplink transmission scheduling information with reference to the first capability information and the second capability information, to achieve higher practicability.

According to a third aspect, an embodiment of this application provides a communication method. The method includes:

A network device determines uplink transmission scheduling information based on first capability information when a first condition is satisfied, where the first capability information indicates a resource-level or resource group-level transmission capability of a terminal device, and the first condition indicates that the network device can obtain the resource-level or resource group-level transmission capability of the terminal device. The network device sends the uplink transmission scheduling information to the terminal device.

Based on the solution, in this embodiment of this application, the network device can obtain resource-level or resource group-level transmission capability information used by the terminal device for uplink transmission, so that during uplink transmission scheduling, the network device can jointly consider a terminal-level transmission capability limitation of the terminal device and a resource-level transmission capability limitation used for uplink transmission, and determine, based on the terminal-level transmission capability limitation and the resource-level transmission capability limitation, the uplink transmission scheduling information sent to the terminal device, to effectively avoid a problem of a transmission failure caused by scheduled uplink transmission exceeding a capability of the resource or resource group used by the terminal device.

In a possible implementation, the first capability information is carried in signal quality information of one or more resources or resource groups reported by the terminal device to the network device.

In a possible implementation, the at least one resource includes a first resource.

A terminal transmission capability corresponding to the first resource includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the at least one resource group includes a first resource group.

A terminal transmission capability corresponding to the first resource group includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

Based on the solution, this embodiment of this application defines a plurality of types of resource-level or resource group-level transmission capability information, to achieve higher practicability.

**In** a possible implementation, the first condition includes one or more of the following:

the network device receives the first capability information sent by the terminal device;
the network device receives first indication information sent by the terminal device, where the first indication information indicates that the terminal device supports reporting the first capability information;
the network device sends second indication information to the terminal device, where the second indication information indicates that the terminal device supports reporting the first capability information; or the network device stores resource-level or resource group-level transmission capability information used by the terminal device for uplink transmission.

Based on the solution, this embodiment of this application provides a plurality of situations included in the first condition, to achieve higher practicability.

In a possible implementation, the network device receives second capability information sent by the terminal device, where the second capability information indicates a terminal-level transmission capability based on the terminal device of the terminal device.

In a possible implementation, the second capability information includes one or more of the following: a maximum quantity of transmission codewords supported by the terminal device, whether the terminal device supports dual-codeword transmission, whether the terminal device supports performing simultaneous transmission by using a plurality of beams, whether the terminal device supports performing frequency division transmission by using a plurality of beams, an uplink transmission mode supported by the terminal device, the first capability information, and the first indication information.

**In** a possible implementation, when determining that the first condition is not satisfied, the network device determines the uplink transmission scheduling information based on the second capability information.

According to a fourth aspect, an embodiment of this application provides a communication apparatus. The apparatus includes at least one processing module and at least one storage module. The storage module stores program code, and when the program code is executed by the processing module, the processing module is enabled to perform the following process.

The processing module is configured to send first capability information to a network device by using a communication module, where the first capability information indicates a terminal transmission capability corresponding to at least one resource or resource group.

In a possible implementation, the communication module is further configured to:
receive uplink transmission scheduling information sent by the network device, where the uplink transmission scheduling information is determined by the network device based on the first capability information.

The processing module is further configured to: perform uplink transmission based on the uplink transmission scheduling information.

In a possible implementation, the first capability information is carried in a measurement report sent by the terminal device to the network device, and the measurement report includes a measurement result of the at least one resource or resource group.

In a possible implementation, the at least one resource includes a first resource.

A terminal transmission capability corresponding to the first resource includes one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the at least one resource group includes a first resource group.

A terminal transmission capability corresponding to the first resource group includes one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the processing module is further configured to:
send second capability information to the network device by using the communication module, where the second capability information indicates a transmission capability of the terminal device.

In a possible implementation, the second capability information includes one or more of the following:
a maximum quantity of codewords that can be transmitted by the terminal device, whether the terminal device supports transmitting two codewords, whether the terminal device supports performing simultaneous transmission by using a plurality of beams, whether the terminal device can perform space division transmission by using a plurality of beams, whether the terminal device supports performing frequency division transmission by using a plurality of beams, an uplink transmission mode supported by the terminal device, whether the terminal device supports performing transmission by using two timing advances, and whether the terminal device supports reporting the first capability information.

In a possible implementation, before sending the first capability information to the network device by using the communication module, the processing module is further configured to:
send first indication information to the network device by using the communication module, where the first indication information indicates that the terminal device supports reporting the first capability information.

In a possible implementation, the first indication information is included in the second capability information, and the second capability information indicates a transmission capability of the terminal device.

In a possible implementation, before the processing module sends the first capability information to the network device by using the communication module, the communication module is further configured to:
receive second capability information sent by the network device, where the second capability information indicates the terminal device to report the first capability information.

According to a fifth aspect, an embodiment of this application provides a communication apparatus. The apparatus includes at least one processing module and at least one storage module. The storage unit stores program code, and when the program code is executed by the processing module, the processing module is enabled to perform the following process.

A communication module is configured to receive the first capability information sent by the terminal device.

The processing module is configured to determine uplink transmission scheduling information based on the first capability information, and send the uplink transmission scheduling information to the terminal device by using the communication module.

In a possible implementation, the communication module is further configured to:
receive an uplink signal transmitted by the terminal device based on the uplink transmission scheduling information.

In a possible implementation, the first capability information is carried in a measurement report sent by the terminal device to the network device, and the measurement report further includes a measurement result of the at least one resource or resource group.

In a possible implementation, the at least one resource includes a first resource.

A terminal transmission capability corresponding to the first resource includes one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the at least one resource group includes a first resource group.

A terminal transmission capability corresponding to the first resource group includes one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the communication module is further configured to:

receive second capability information sent by the terminal device, where the second capability information indicates a transmission capability of the terminal device.

In a possible implementation, the second capability information includes one or more of the following: a maximum quantity of codewords that can be transmitted by the terminal device, whether the terminal device supports transmitting two codewords, whether the terminal device supports performing simultaneous transmission by using a plurality of beams, whether the terminal device can perform space division transmission by using a plurality of beams, whether the terminal device supports performing frequency division transmission by using a plurality of beams, an uplink transmission mode supported by the terminal device, and whether the terminal device supports performing transmission by using two timing advances.

In a possible implementation, before receiving the first capability information sent by the terminal device, the communication module is further configured to:

receive first indication information sent by the terminal device, where the first indication information indicates that the terminal device supports reporting the first capability information.

In a possible implementation, the first indication information is included in the second capability information, and the second capability information indicates a transmission capability of the terminal device.

In a possible implementation, before receiving the first capability information sent by the terminal device, the communication module is further configured to:

send second indication information to the terminal device, where the second indication information indicates the terminal device to report the first capability information.

In a possible implementation, the processing module is specifically configured to:

when determining that a first condition is satisfied, determine the uplink transmission scheduling information based on the first capability information.

The first condition includes one or a combination of the following:

the terminal device supports reporting the first capability information;
the network device configures the terminal device to report the first capability information;
the terminal device reports the first capability information; and
the first capability information includes a terminal transmission capability corresponding to an uplink transmission beam corresponding to the uplink transmission scheduling information.

According to a sixth aspect, an embodiment of this application provides a communication apparatus. The apparatus includes at least one processing module and at least one storage module. The storage unit stores program code, and when the program code is executed by the processing module, the processing module is enabled to perform the following process.

The processing module is configured to determine uplink transmission scheduling information based on first capability information when a first condition is satisfied, where the first capability information indicates a resource-level or resource group-level transmission capability of a terminal device, and the first condition indicates that the network device can obtain the resource-level or resource group-level transmission capability of the terminal device.

A communication module is configured to send the uplink transmission scheduling information to the terminal device.

In a possible implementation, the first capability information is carried in signal quality information of one or more resources or resource groups reported by the terminal device to the network device.

In a possible implementation, the at least one resource includes a first resource.

A terminal transmission capability corresponding to the first resource includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the at least one resource group includes a first resource group.

A terminal transmission capability corresponding to the first resource group includes one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

In a possible implementation, the first condition includes one or more of the following:

the communication module receives the first capability information sent by the terminal device;
the communication module receives first indication information sent by the terminal device, where the first indication information indicates that the terminal device supports reporting the first capability information;
the processing module sends second indication information to the terminal device by using the communication module, where the second indication information indicates that the terminal device supports reporting the first capability information; or
the processing module determines that resource-level or resource group-level transmission capability information used by the terminal device for uplink transmission is stored.

In a possible implementation, the communication module is further configured to:
receive second capability information sent by the terminal device, where the second capability information indicates a terminal-level transmission capability based on the terminal device of the terminal device.

In a possible implementation, the second capability information includes one or more of the following: a maximum quantity of transmission codewords supported by the terminal device, whether the terminal device supports dual-codeword transmission, whether the terminal device supports performing simultaneous transmission by using a plurality of beams, whether the terminal device supports performing frequency division transmission by using a plurality of beams, an uplink transmission mode supported by the terminal device, the first capability information, and the first indication information.

In a possible implementation, the processing module is further configured to:
when determining that the first condition is not satisfied, determine the uplink transmission scheduling information based on the second capability information.

According to a seventh aspect, an embodiment of this application provides a communication apparatus. The communication device can implement the method according to any one of the first aspect to the third aspect of the foregoing embodiments, or according to the possible implementations of the first aspect to the third aspect.

In a possible implementation, the communication apparatus may be a terminal device, or a component that may be used in a terminal device, for example, a chip, a chip system, or a circuit. An apparatus for negotiating a terminal device capability may include a transceiver and a processor.

The processor may be configured to support the apparatus for negotiating a terminal device capability to perform a corresponding function of the terminal device. The transceiver is configured to support communication between the apparatus for negotiating a terminal device capability and another device (for example, a network device).

Optionally, the apparatus for negotiating a terminal device capability may further include a memory. The memory may be coupled to the processor, and the memory stores program instructions and data that are necessary for the communication apparatus. The transceiver may be an independent receiver, an independent transmitter, a transceiver integrating a transceiver function, or an interface circuit.

In a possible implementation, the communication apparatus may be a network device, or a component that may be used in a network device, for example, a chip, a chip system, or a circuit. An apparatus for negotiating a network device capability may include a transceiver and a processor.

The processor may be configured to support the apparatus for negotiating a terminal device capability to perform a corresponding function of the network device. The transceiver is configured to support communication between the apparatus for negotiating a terminal device capability and another device (for example, a terminal device).

Optionally, the communication apparatus may further include a memory. The memory may be coupled to the processor, and the memory stores program instructions and data that are necessary for the communication apparatus. The transceiver may be an independent receiver, an independent transmitter, a transceiver integrating a transceiver function, or an interface circuit.

According to an eighth aspect, an embodiment of this application provides a communication system, including a terminal device and a network device.

The terminal device is configured to perform the method according to any one of the first aspect or the possible implementations of the first aspect. The network device is configured to perform the method according to any one of the second aspect or the possible implementations of the second aspect, or the network device is configured to perform the method according to any one of the third aspect or the possible implementations of the third aspect.

According to a ninth aspect, an embodiment of this application provides a chip system, including a processor, and optionally, further including a memory. The memory is configured to store a computer program. The processor is configured to invoke the computer program from the memory and run the computer program, so that a communication apparatus in which the chip system is installed performs the method according to any one of the first aspect to the third aspect, or according to any one of the possible implementations of the first aspect to the third aspect.

According to a tenth aspect, an embodiment of this application provides a computer program product.

The computer program product includes computer program code. When the computer program code is run by a communication unit and a processing unit, or a transceiver and a processor of a communication apparatus, the communication apparatus is enabled to perform the method according to any one of the first aspect to the third aspect, or according to any one of the possible implementations of the first aspect to the third aspect.

According to an eleventh aspect, an embodiment of this application provides a computer-readable storage medium. The computer-readable storage medium stores a program, and the program enables a communication apparatus (for example, a terminal device or a network device) to perform the method according to any one of the first aspect to the third aspect, or according to the possible implementations of the first aspect to the third aspect.

BRIEF DESCRIPTION OF DRAWINGS

FIG. 1 is a diagram of an antenna panel according to an embodiment of this application;

FIG. 2 is a diagram of a communication system according to an embodiment of this application;

FIG. 3 is a diagram of a communication scenario according to an embodiment of this application;

FIG. 4 is a diagram of another communication scenario according to an embodiment of this application;

FIG. 5 is a diagram of a communication architecture according to an embodiment of this application;

FIG. 6 is a diagram of another communication architecture according to an embodiment of this application;

FIG. 7 is a schematic flowchart of a first communication method according to an embodiment of this application;

FIG. 8 is a schematic flowchart of a second communication method according to an embodiment of this application;

FIG. 9 is a schematic flowchart of a third communication method according to an embodiment of this application;

FIG. 10 is a schematic flowchart of a fourth communication method according to an embodiment of this application;

FIG. 11 is a schematic flowchart of a fifth communication method according to an embodiment of this application;

FIG. 12 is a schematic flowchart of a sixth communication method according to an embodiment of this application;

FIG. 13 is a diagram of a first communication apparatus according to this application;

FIG. 14 is a diagram of a second communication apparatus according to this application; and

FIG. 15 is a diagram of a terminal device according to this application.

DESCRIPTION OF EMBODIMENTS

The following describes this application in detail with reference to the accompanying drawings of this specification.

A communication method provided in embodiments of this application may be applied to a 4th generation (4th generation, 4G) communication system, for example, a long term evolution (long term evolution, LTE) system, or may be applied to a 5th generation (5th generation, 5G) communication system, for example, a 5G new radio (new radio, NR) system, or applied to various future communication systems, for example, a 6th generation (6th generation, 6G) communication system.

The method and an apparatus provided in embodiments of this application are based on a same or similar technical concept. Because problem solving principles of the method and the apparatus are similar, mutual reference may be made to implementations of the apparatus and the method. Repeated descriptions are not described.

The following first describes some terms in embodiments of this application, to facilitate understanding of a person skilled in the art.

(1) A resource in embodiments of this application may be an uplink signal resource, or may be a downlink signal resource.

An uplink signal includes but is not limited to a sounding reference signal (sounding reference signal, SRS) and a demodulation reference signal (demodulation reference signal, DMRS).

A downlink signal includes but is not limited to: a channel state information reference signal (channel state information reference signal, CSI-RS), a cell-specific reference signal (cell-specific reference signal, CS-RS), a UE-specific reference signal (user equipment-specific reference signal, US-RS), a demodulation reference signal (demodulation reference signal, DMRS), and a synchronization signal/physical broadcast channel block (synchronization signal/physical broadcast channel block, SS/PBCH block).

The resource in embodiments of this application includes but is not limited to a beam, and a resource group includes but is not limited to a beam group.

It may be understood that, in beam measurement, there is a correspondence between a beam and a resource (for example, a network device sends, by using a beam, a resource corresponding to the beam), and that a terminal device measures quality of the resource is equal to that the terminal device measures quality of the beam. Therefore, the resource or the resource group in embodiments of this application may be the beam or the beam group.

(2) The beam in embodiments of this application is a communication resource, and different beams may be considered as different resources.

The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator state (transmission configuration indicator state, TCI-state) parameter or a spatial relation (spatial relation) parameter.

Therefore, in this application, the beam may be replaced with the spatial domain filter, the spatial filter, the spatial domain parameter, the spatial parameter, the spatial domain setting, the spatial setting, the QCL information, the QCL assumption, the QCL indication, a TCI-state (including an uplink TCI-state or a downlink TCI-state), a spatial relation, or the like. The foregoing terms are also equivalent to each other. The beam may alternatively be replaced with another term for representing the beam. This is not limited in this application.

A beam used for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by the TCI-state.

A beam used for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by any one of the spatial relation, the uplink TCI-state, or a sounding reference signal (sounding reference signal, SRS) resource (indicating that a transmission beam of the SRS is used). Therefore, the uplink beam may alternatively be replaced with the SRS resource.

The transmission beam may be distribution of signal strength formed in different directions in space after a signal is transmitted through an antenna, and the reception beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital beamforming technology, a hybrid analog beamforming technology, or the like.

The beam usually corresponds to the resource. For example, during beam measurement, the network device measures different beams by using different resources, the terminal device feeds back measured resource quality, and the network device knows quality of a corresponding beam.

During data transmission, beam information is also indicated by a resource corresponding to the beam information. For example, the network device indicates information about a physical downlink shared channel (physical downlink shared channel, PDSCH) beam of the terminal device by using a transmission configuration indicator (transmission configuration indicator, TCI) field in downlink control information (downlink control information, DCI).

Optionally, a plurality of beams that have same or similar communication features are considered as one beam. One beam may include one or more antenna ports, configured to transmit a data channel, a control channel, a sounding signal, or the like. The one or more antenna ports forming the beam may also be considered as one antenna port set.

In embodiments of this application, unless otherwise specified, the beam is a transmission beam of the network device. During beam measurement, each beam of the network device corresponds to one resource. Therefore, an index of the resource may be used for uniquely identifying the beam corresponding to the resource.

(3) An antenna panel (panel) in embodiments of this application may be an antenna panel of the network device, or may be an antenna panel of the terminal device.

There are usually one or more antennas on one antenna panel. These antennas form an antenna array, and beamforming is performed, to form an analog beam. The antenna array may generate beams pointing to different directions, but only one beam can be generated at a same time point. In other words, a plurality of beams may be formed on each antenna panel, and a best beam used by the antenna panel may be determined through beam measurement.

The terminal device may be equipped with a plurality of antenna panels. The antenna panels may be distributed at different locations, and face different directions. This can ensure that at least one antenna panel faces the network device regardless of a direction that the terminal device faces, and the terminal device can perform data transmission with the network device.

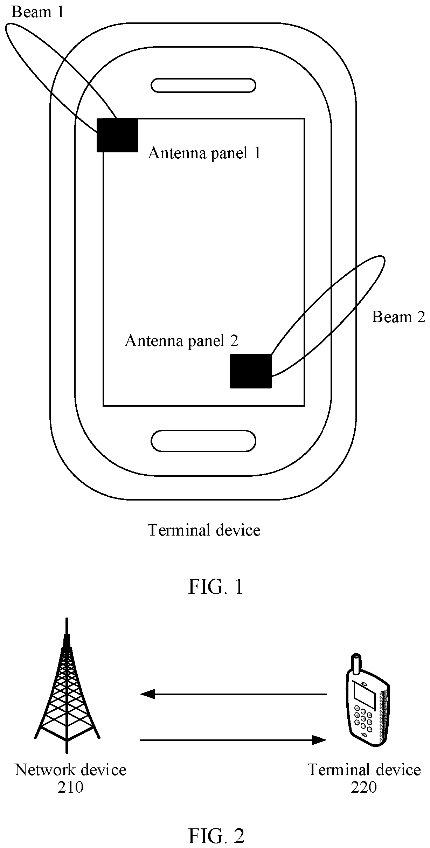

For example, as shown in FIG. 1, the terminal device is equipped with two antenna panels, each antenna panel faces a different direction, and each antenna panel may generate a plurality of beams in different directions, to form comprehensive beam coverage. In FIG. 1, an example in which the terminal device generates a beam 1 by using an antenna panel 1 and generates a beam 2 by using an antenna panel 2 is used for description. The terminal device may simultaneously enable all antenna panels for transmission. Alternatively, to reduce power consumption of the terminal device, the terminal device may perform transmission once by using only one antenna panel, and another unused antenna panel may be disabled. Whether the antenna panel of the terminal device is in an enabled state or a disabled state usually needs to be notified to the network device.

In embodiments of this application, the antenna panel may be referred to as a panel for short, and the antenna panel may also be represented by using an antenna panel index (panel index) or the like.

In addition, the antenna panel may be implicitly represented in another manner. For example, the antenna panel may also be represented by using an antenna port (for example, a CSI-RS port, an SRS port, a demodulation reference signal (demodulation reference signal, DMRS) port, a phase tracking reference signal (phase tracking reference signal, PTRS) port, a CRS port, a time-frequency tracking reference signal (tracking reference signal, TRS) port, or an SSB port) or an antenna port group, may be represented by using a resource (for example, a CSI-RS resource, an SRS resource, a DMRS resource, a PTRS resource, a cell reference signal (cell reference signal, CRS) resource, a TRS resource, or an SSB resource) or a resource group, may be represented by using a channel (for example, a PUCCH, a PUSCH, a physical random access channel (physical random access channel, PRACH), a PDSCH, a PDCCH, or a physical broadcast channel (physical broadcast channel, PBCH)), or may be represented by using a beam, QCL, a TCI-state, a spatial relation, or an index configured in the QCL, the TCI-state, or the spatial relation. Alternatively, the antenna panel may be represented by using a beam group, a QCL group, a TCI-state group, a spatial relation group, or the like. In other words, an identifier of the antenna panel/panel in this application may be replaced with an identifier of the foregoing content.

(4) In embodiments of this application, a "first capability" (capability) means whether a resource or a resource group has a capability of supporting a feature (feature) or a feature set (feature set).

In embodiments of this application, the first capability may be understood as a terminal transmission capability when the terminal device uses a beam corresponding to a resource or a resource group, for example, a quantity of codewords and a quantity of streams that can be transmitted by the terminal device when the terminal device uses the beam corresponding to the resource or the resource group. This is not limited herein.

(5) In embodiments of this application, a "second capability" means whether the terminal device has a capability of supporting a feature (feature) or a feature set (feature set).

In embodiments of this application, the second capability may be understood as a transmission capability of the terminal device. It should be noted that the transmission capability of the terminal device indicated by the second capability in this application is a transmission capability that is unrelated to the beam, in other words, a transmission capability of the terminal device when using of a resource or a resource group is not emphasized.

(6) In embodiments of this application, "capability information" is a set of functions or features included in a capability, and may also be referred to as a capability set or a capability parameter.

For example, in embodiments of this application, first capability information may include but is not limited to one or more of the following:

a. a maximum quantity of transport streams supported by each beam/beam group, in other words, a maximum quantity of streams that can be transmitted by using the beam/beam group;

b. whether beams/beam group supports performing space division transmission by using a plurality of beams;

c. whether each beam/beam group supports performing transmission by using two timing advances;

d. a maximum quantity of transmission codewords supported by each beam/beam group, in other words, a maximum quantity of codewords that can be transmitted by using the beam/beam group;

e. a maximum quantity of transmit antenna ports supported by each beam/beam group, in other words, a maximum quantity of transmit antenna ports corresponding to the beam/beam group;

f. whether each beam/beam group supports dual-codeword transmission, in other words, whether two codewords can be transmitted by using the beam/beam group;

g. whether each beam group supports using a plurality of timing advances (timing advances, TAs), in other words, whether a plurality of different TAs, for example, two independent TAs, can be used when transmission is performed by using the beam group, for example, whether each beam in the beam group can use different TAs;

h. whether each beam/beam group supports uplink transmission of k or more streams, where for example, k=2, 3, or 4;

i. whether joint precoding can be performed on a signal corresponding to each beam/beam group;

j. whether independent precoding can be performed on the signal corresponding to each beam/beam group;

k. whether simultaneous transmission can be performed by using a plurality of beams in each beam group, where

in an example, whether simultaneous transmission can be performed by using the plurality of beams in each beam group in embodiments of this application may be specifically classified into:

whether transmission signals corresponding to the plurality of beams in the beam group are allowed to partially overlap in time domain; or whether transmission signals corresponding to the plurality of beams in the beam group are allowed to completely overlap in time domain;

l. whether frequency division transmission can be performed by using the plurality of beams in each beam group, where
in an example, whether frequency division transmission can be performed by using the plurality of beams in each beam group in embodiments of this application may be specifically classified into:

whether the transmission signals corresponding to the plurality of beams in the beam group are allowed to partially overlap in frequency domain;

whether the transmission signals corresponding to the plurality of beams in the beam group are allowed to completely overlap in frequency domain; or

whether the transmission signals corresponding to the plurality of beams in the beam group are allowed to completely be staggered in frequency domain;

m. an uplink transmission mode supported by each beam/beam group, in other words, a transmission mode that can be performed by using the beam/-beam group; and
n. whether each beam group supports one or more of the following uplink transmission modes:
multi-beam frequency division transmission, multi-beam space division transmission, and multi-beam repeated transmission.

The multi-beam frequency division transmission may mean that beams in the beam group use different frequency resources for transmission.

In an example, the multi-beam frequency division transmission in embodiments of this application may be further classified into the following:
Intra-cell frequency division: The beams in the beam group use different frequency domain resources in a same cell for transmission.

Cross-cell frequency division: The beams in the beam group use frequency domain resources in different cells for transmission.

Cross-cell frequency division: The beams in the beam group use frequency domain resources of different bandwidth parts (bandwidth parts, BWPs) for transmission.

Cross-cell frequency division: The beams in the beam group use different resource block groups (resource block groups, RBGs) or precoding resource block groups (precoding resource block groups, PRGs) for transmission.

The multi-beam space division transmission may mean that the beams in the beam group use a same time-frequency resource for transmission.

In an example, the multi-beam space division transmission in embodiments of this application may be further classified into the following:
The beams in the beam group are used for transmitting different streams of same data.

The beams in the beam group are used for transmitting different data, for example, different codewords.

The beams in the beam group are used for transmitting a same signal.

The multi-beam repeated transmission may mean that the beams in the beam group are used for repeatedly transmitting the same data.

In an example, the multi-beam repeated transmission in embodiments of this application is further classified into the following:
The beams in the beam group are used for transmitting a plurality of RVs of the same data. To be specific, each beam is used for transmitting one RV, and RVs transmitted by using a plurality of beams are the same or different.

For another example, in embodiments of this application, second capability information may include but is not limited to one or more of the following:

a. a maximum quantity of transport streams supported by the terminal device;
b. a maximum quantity of transmission codewords supported by the terminal device;
c. a maximum quantity of transmission antenna ports supported by the terminal device;
d. whether the terminal device supports dual-codeword transmission;
e. whether the terminal device supports using two TAs, in other words, performing uplink transmission by using a plurality of TAs;
f. whether the terminal device supports uplink transmission of k or more streams, where for example, k=2, 3, or 4;
g. whether the terminal device supports performing joint precoding on signals corresponding to a plurality of beams;
h. whether the terminal device supports performing independent precoding on signals corresponding to a plurality of beams;
i. whether the terminal device supports performing simultaneous transmission by using a plurality of beams, where
in an example, in embodiments of this application, whether the terminal device supports performing simultaneous transmission by using the plurality of beams may be further classified into:

whether transmission signals corresponding to the plurality of beams can partially overlap in time domain; or
whether transmission signals corresponding to the plurality of beams can completely overlap in time domain;

j. whether the terminal device supports performing frequency division transmission by using a plurality of beams, where
in an example, in embodiments of this application, whether the terminal device supports performing frequency division transmission by using the plurality of beams may be further classified into:

whether transmission signals corresponding to the plurality of beams can partially overlap in frequency domain;
whether transmission signals corresponding to the plurality of beams can completely overlap in frequency domain; or
whether transmission signals corresponding to the plurality of beams can be completely staggered in frequency domain;

k. an uplink transmission mode supported by the terminal device; and
l. whether the terminal device supports one or more of the following uplink transmission modes:
multi-beam frequency division transmission, multi-beam space division transmission, and multi-beam repeated transmission.

The multi-beam frequency division transmission may mean that beams use different frequency resources for transmission.

In an example, the multi-beam frequency division transmission in embodiments of this application may be further classified into the following:
Intra-cell frequency division: A plurality of beams use different frequency domain resources in a same cell for transmission.

Cross-cell frequency division: A plurality of beams use frequency domain resources in different cells for transmission.

Cross-cell frequency division: A plurality of beams use frequency domain resources of different BWPs for transmission.

Cross-cell frequency division: A plurality of beams use different RBGs or PRGs for transmission.

The multi-beam space division transmission may mean that the beams use a same time-frequency resource for transmission.

In an example, the multi-beam space division transmission in embodiments of this application may be further classified into the following:
The beams are used for transmitting different streams of same data.

The beams are used for transmitting different data, for example, different codewords.

The beams are used for transmitting a same signal.

The multi-beam repeated transmission may mean that the beams are used for repeatedly transmitting the same data.

In an example, the multi-beam repeated transmission in embodiments of this application is further classified into the following:
The beams are used for transmitting a plurality of RVs of the same data. To be specific, each beam is used for transmitting one RV, and RVs transmitted by using the plurality of beams are the same or different.

In embodiments of this application, "a plurality of" means two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that in descriptions of this application, terms such as "first" and "second" are merely used for distinguishing and description, but should not be understood as indicating or implying relative importance, or should not be understood as indicating or implying a sequence.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the terms such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a relative concept in a specific manner.

The following briefly describes the application background of this application.

Currently, in a communication transmission process, a network device needs to perform scheduling based on terminal capability information reported by a terminal device. For example, the network device may schedule the terminal device based on a quantity of supported transport streams and a quantity of supported codewords that are reported by the terminal device.

To effectively improve transmission quality, during uplink and downlink data transmission, the network device and the terminal device usually use one beam or a beam group for uplink transmission. When a beam group is used, the beam group may be located on different antenna panels (antenna panels). For example, uplink transmission is performed by using beams on a plurality of panels, and the beams may be used for simultaneous transmission or may be used for time division transmission. Alternatively, the beam group may be located on a same panel. **In** this case, the beams in the beam group can only be used for time division transmission.

However, during uplink transmission scheduling performed by the network device based on the terminal capability information currently reported by the terminal device, the network device cannot perform targeted uplink transmission scheduling based on a transmission capability of a beam or a beam group used by the terminal device. Consequently, an uplink transmission beam or beam group used by the terminal device usually cannot support transmission scheduling of the network device, resulting in a high communication transmission failure rate.

Based on this, embodiments of this application provide a communication method. In a communication process according to the communication method provided in embodiments of this application, a network device may obtain transmission capability information that corresponds to one or more resources or resource groups and that is reported by a terminal. When the resource or resource group is subsequently used for transmission, scheduling may be performed based on the transmission capability information of the resource or resource group, to effectively avoid a problem of a transmission failure caused by scheduled uplink transmission exceeding a transmission capability of the resource or resource group.

For ease of understanding of embodiments of this application, a communication system shown in FIG. 2 is first used as an example to describe in detail a communication system to which embodiments of this application are applicable. As shown in FIG. 2, the communication system includes one or more network devices 210 and one or more terminal devices 220.

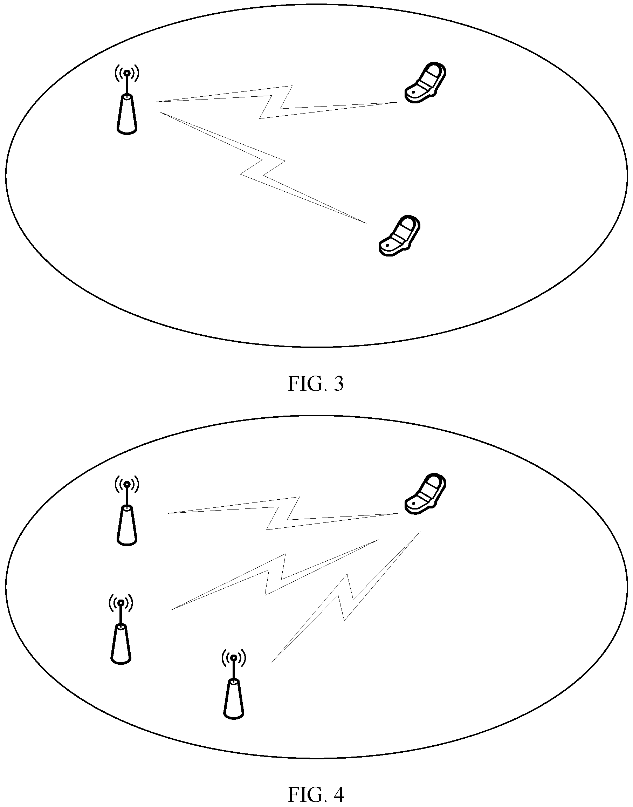

In an example, when a communication scenario is that one network device transmits data or control signaling to one or more terminal devices, a communication architecture may be shown in FIG. 3. When a communication scenario is that a plurality of network devices simultaneously transmit data or control signaling to one terminal device, a communication architecture may be shown in FIG. 4.

The network device in embodiments of this application may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like; or may be a network device in a 5G mobile communication system, for example, a next generation NodeB (next generation NodeB, gNB), a transmission reception point (transmission reception point, TRP) or a TP in an NR system, or one antenna panel or a group (including a plurality of antenna panels) of antenna panels of a base station in the 5G mobile communication system. Alternatively, the network device may be a network node that constitutes a gNB or a transmission point, for example, a BBU or a distributed unit (distributed unit, DU).

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control RRC layer and a packet data convergence protocol (packet data convergence protocol, PDCP) layer. The DU is responsible for processing a physical layer protocol and a real-time service, and implementing functions of a radio link control (radio link control, RLC) layer, a MAC layer, and a physical (physical, PHY) layer. The AAU implements some physical layer processing functions, radio frequency processing, and a function related to an active antenna. Information at the RRC layer is finally changed to information at the PHY layer, or is changed from the information at the PHY layer. Therefore, in this architecture, high-layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified as a network device in the RAN, or the CU may be classified into a network device in a core network (core network, CN). This is not limited in this application.

The terminal device in embodiments of this application may be a wireless terminal device that can receive scheduling and indication information of the network device. The terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing the user with the voice/data connectivity), for example, a handheld device or a vehicle-mounted device with a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in internet of vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in the industrial control may be a camera, a robot, or the like. The wireless terminal in the smart home may be a television, an air conditioner, a sweeper robot, a speaker, a set-top box, or the like.

Further, the terminal device in embodiments of this application may further report a capability related to an antenna architecture of the terminal device.

When the terminal device performs simultaneous transmission by using two panels, the two panels correspond to different architectures, and can also support different transmission modes.

The following describes the two architectures.

Architecture 1: The two panels each are connected to independent radio frequencies, independent intermediate frequencies, independent digital paths, and independent basebands. In other words, each panel corresponds to an independent set of a radio frequency, an intermediate frequency, a digital path, and a baseband.

In the architecture 1, the terminal device may support a maximum quantity of simultaneous transmission modes. For example, the terminal device may support transmitting different codewords by using the two panels, transmitting different streams of a same codeword by using the two panels, performing frequency division transmission by using the two panels, and transmitting a same signal by using the two panels.

The terminal device having the architecture 1 may report a first terminal capability to the network device. After receiving the reported first terminal capability, the network device learns that the terminal device supports the transmission modes.

Architecture 2: The two panels share a same baseband and a same digital path. Radio frequency modules and intermediate frequency modules corresponding to the two panels may be independent, or may be the same.

In the architecture 2, the terminal device cannot support some transmission modes. For example, the terminal device does not support transmitting different codewords by using the two panels, transmitting different streams of a same codeword by using the two panels, transmission performed by the two panels by using independent precoding, or transmission of the two panels by using different frequency domain resources.

The terminal device having the architecture 2 may report a second terminal capability to the network device. After receiving the reported second terminal capability, the network device learns that the terminal device supports the transmission modes. In this case, the network device cannot configure the transmission modes for the terminal device.

The terminal device having the architecture 2 may alternatively implement, by using some special methods, transmission performed by the two panels by using independent precoding. For example, a phase shift is performed on a phase shifter corresponding to a second panel, to equivalently implement an independent precoding function.

Specifically, it is assumed that the network device indicates two precoding matrices for the terminal device, and a baseband of the terminal device uses first precoding. If no special processing is performed, the two panels finally use the precoding because the two panels share the baseband.

To enable the second panel to use independent precoding, an entire phase shift may be performed on a group of phase shifters that are on the second panel and that are connected to digital paths (digital ports port). This is equivalent to changing a signal on each digital path, and is equivalent to changing a precoding matrix.

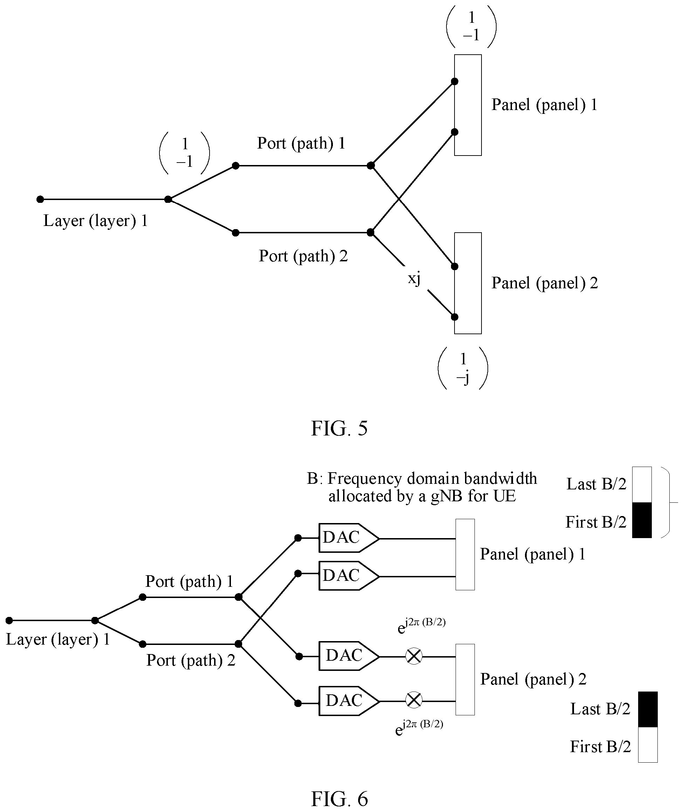

For example, as shown in FIG. 5, it is assumed that the network device indicates, to the terminal device, two precoding matrices: $\begin{pmatrix} 1 \\ -1 \end{pmatrix}$ and $\begin{pmatrix} 1 \\ -j \end{pmatrix}$, and the terminal device uses $\begin{pmatrix} 1 \\ -1 \end{pmatrix}$ in the baseband. In this way, both precoding matrices corresponding to the two panels are $\begin{pmatrix} 1 \\ -1 \end{pmatrix}$. To enable the second panel to equivalently use the precoding matrix $\begin{pmatrix} 1 \\ -j \end{pmatrix}$, a phase shift of pi/2 may be performed on all phase shifters that are on the second panel and that are connected to a second digital path (port 2). This is equivalent to multiplying a signal on the port 2 by j, and is equivalent to converting $\begin{pmatrix} 1 \\ -1 \end{pmatrix}$ into $\begin{pmatrix} 1 \\ -j \end{pmatrix}$.

According to the foregoing method, although the two panels use the same baseband and the same digital port, independent precoding may also be equivalently implemented.

The foregoing special processing also has a capability requirement. A terminal device having the foregoing special processing capability may report a third capability to the terminal device, to indicate that the terminal device has the foregoing capability. The implementation of equivalent independent precoding in the foregoing processing manner is limited to some extent. For example, precoding of the second panel implemented by using the foregoing method is whole-band. In other words, the second panel cannot use different precoding at different frequencies.

Therefore, for the terminal device that reports the third capability, the network device needs to ensure that a second precoding matrix indicated by the network device to the terminal device is a precoding matrix of a unified precoder for the whole band. When the network device schedules the terminal device to perform uplink transmission on a plurality of groups of frequency resources, second precoding indicated to the terminal device is the same on the plurality of groups of frequency domain resources. For example, when the network device schedules the terminal device to perform uplink multi-carrier transmission, in other words, perform uplink transmission at a plurality of carrier frequencies, second precoding matrices used for transmission on a plurality of carriers are the same.

In addition, for the terminal device that reports the third capability, the network device needs to ensure that the second precoding matrix indicated by the network device to the terminal device can be derived by using a first precoding matrix. In other words, any row of the second precoding matrix may be obtained by multiplying a same row of the first precoding matrix by a constant (where an $i^{th}$ row may be any row), and the constant may be 1, -1, j, or -j. In other words, selection of the second precoding matrix is limited, and the network device determines an optional range of the second precoding matrix based on the first precoding matrix. The foregoing limitation may be used only when a codebook with a rank 2 or a higher rank is used, and a codebook with a rank 1 may not need to satisfy the foregoing limitation.

The terminal device having the architecture 2 may alternatively implement, by using some special methods, transmission performed by the two panels by using different frequency resources. For example, as shown in FIG. 6, frequency shifting is performed on a signal corresponding to a second panel, so that a first panel and the second panel use different frequencies for transmission. Frequency shifting may be performed on an analog signal corresponding to the second panel, or frequency shifting may be performed on a time-domain digital signal. The foregoing special processing also has a capability requirement. A terminal device having the foregoing special processing capability may report a fourth capability to the terminal device, to indicate that the terminal device has the foregoing capability.

The implementation of transmission performed by the two panels by using different frequencies in the foregoing processing manner is limited to some extent. For example, because frequency shifting is performed on a signal, the two panels transmit essentially a same signal by using different frequencies. Therefore, frequency division transmission of the two panels implemented in the foregoing manner can only be used for transmitting a same signal, and cannot be used for transmitting different signals.

Therefore, when the terminal device reports the fourth capability supported by the terminal device, the network device cannot configure, for the terminal device, a frequency division transmission mode other than a transmission mode in which the two panels transmit the same signal. For example, the two panels transmit different RVs (redundancy versions, redundancy versions) by using different frequencies. In addition, when the terminal device reports the fourth capability supported by the terminal device, if the network device indicates the terminal device to use frequency division transmission, the network device cannot indicate the terminal device to perform simultaneous transmission on a plurality of CCs. Otherwise, interference between the CCs is caused after frequency domain shifting.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

It should be understood that FIG. 1 to FIG. 6 are merely simplified diagrams for ease of understanding. The communication system may further include a core network device, another network device, another terminal device, or the like. Alternatively, the terminal device may further include another component or unit module. For example, the terminal device may include a processor, a memory, and a transceiver. The transceiver may include a transmitter, a receiver 2, an antenna, and the like, which are not shown in FIG. 1 to FIG. 6. Alternatively, the network device may further include another component or unit module. For example, the network device may include a processor, a memory, and a transceiver. The transceiver may include a transmitter, a receiver, an antenna, and the like, which are not shown in FIG. 1 and FIG. 6.

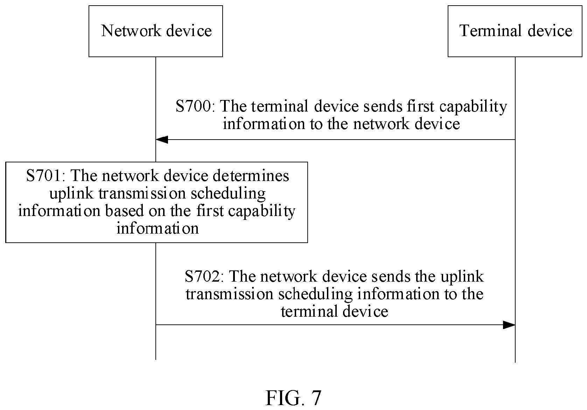

Based on descriptions of content such as the foregoing application scenario, an embodiment of this application provides a communication method. As shown in FIG. 7, the method includes the following steps.

S700: A terminal device sends first capability information to a network device, where the first capability information indicates a terminal transmission capability corresponding to at least one resource or resource group.

For example, it is assumed that when a beam used by the terminal device for uplink transmission is a beam 1, the first capability information indicates a capability of the terminal device when the terminal device uses the beam 1. Alternatively, it is assumed that when a beam group used by the terminal device for uplink transmission is a beam group 1, the first capability information indicates a specific capability of the terminal device when the terminal device uses the beam group 1.

For content included in the first capability information in this embodiment of this application, refer to the foregoing descriptions. For brevity, details are not described herein again.

Further, in this embodiment of this application, the first capability information may be carried in a measurement report sent by the terminal device to the network device, and the measurement report includes a measurement result of the at least one resource or resource group.

The network device may configure, by using measurement configuration information, the terminal device to report the first capability information corresponding to the at least one resource or resource group.

Optionally, it may be specified that the network device can configure, only when the terminal device indicates, by using first indication information, that the terminal device supports reporting the first capability information, a terminal device i to report the first capability information. The first indication information may be carried in second capability information for reporting. In other words, whether the terminal device supports reporting the first capability information is also a terminal capability.

S701: The network device determines uplink transmission scheduling information based on the first capability information.

Further, in this embodiment of this application, when determining the uplink transmission scheduling information based on the first capability information, the network device needs to determine that a first condition is satisfied, where the first condition indicates that the network device can obtain a resource-level or resource group-level transmission capability of the terminal device.

In an example, the first condition in this embodiment of this application includes but is not limited to one or a combination of the following:

First condition 1: The network device receives the first capability information sent by the terminal device.

First condition 2: The network device receives the first indication information sent by the terminal device, where the first indication information indicates that the terminal device supports reporting the first capability information.

First condition 3: The network device sends second indication information to the terminal device, where the second indication information indicates the terminal device to report the first capability information.

First condition 4: The terminal device has reported resource-level or resource group-level transmission capability information used for uplink transmission.

For example, in this embodiment of this application, the network device may store the first capability information each time after obtaining the first capability information from the terminal device. When determining the uplink transmission scheduling information, the network device may obtain, from stored resource-level or resource group-level transmission capability information, the resource-level or resource group-level transmission capability information used by the terminal device for uplink transmission, and determine, based on the resource-level or resource group-level transmission capability information, the uplink transmission scheduling information to be sent to the terminal device.

The network device may store the obtained transmission capability information of the resource or the resource group in storage space of the network device, or may store the obtained transmission capability information of the resource or the resource group in a third-party storage platform.

It may be understood that, if the network device receives the first capability information from the terminal device, to better ensure accuracy of the uplink transmission scheduling information, the network device may directly determine the uplink transmission scheduling information based on the received first capability information, and the network device may further update the stored resource-level or resource group-level transmission capability information based on the first capability information.

Further, in this embodiment of this application, if the network device determines that the first condition is not satisfied, the network device may determine the uplink transmission scheduling information based on the second capability information sent by the terminal device. The second capability information indicates a terminal-level transmission capability of the terminal device.

For content included in the second capability information in this embodiment of this application, refer to the foregoing descriptions. For brevity, details are not described herein again.

S702: The network device sends the uplink transmission scheduling information to the terminal device.

Further, after the terminal device receives the uplink transmission scheduling information sent by the network device, the terminal device performs uplink transmission based on the uplink transmission scheduling information, so that the network device receives an uplink signal transmitted by the terminal device based on the uplink transmission scheduling information.

According to the solution, in this embodiment of this application, the network device can obtain the resource-level or resource group-level transmission capability information used by the terminal device for uplink transmission, so that during uplink transmission scheduling, the network device can jointly consider a terminal-level transmission capability limitation of the terminal device and a resource-level transmission capability limitation used for uplink transmission, and determine, based on the terminal-level transmission capability limitation and the resource-level transmission capability limitation, the uplink transmission scheduling information sent to the terminal device, to effectively avoid a problem of a transmission failure caused by scheduled uplink transmission exceeding a capability of the resource or resource group used by the terminal device.

The following further describes the communication method in embodiments of this application in detail with reference to specific embodiment descriptions and the accompanying drawings of this specification. Embodiments in this application may be combined with each other. In addition, explanations of features in embodiments are applicable to other embodiments.

Scenario 1: A network device receives first capability information sent by a terminal device.

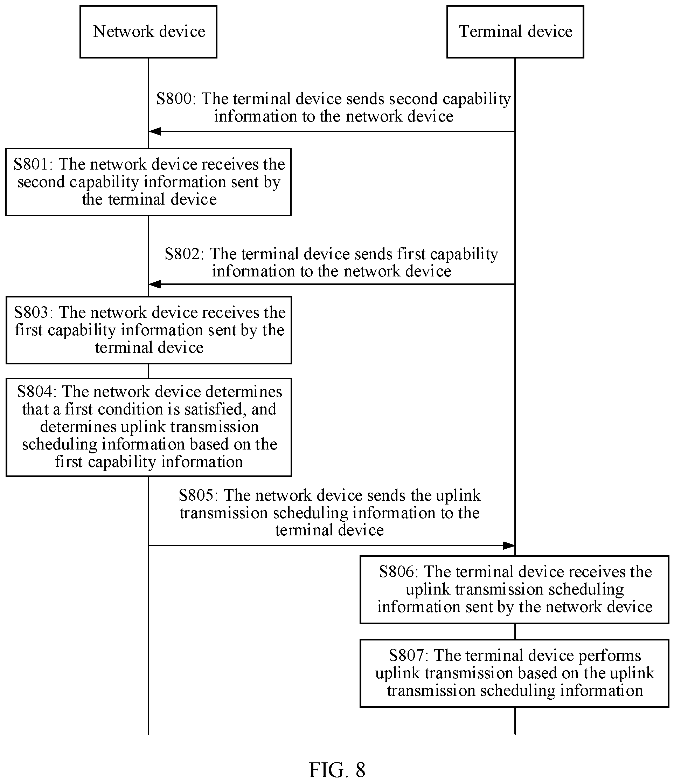

As shown in FIG. 8, based on the scenario 1, specific steps of communication between the terminal device and the network device in this embodiment of this application are as follows.

S800: The terminal device sends second capability information to the network device.

The second capability information indicates a transmission capability of the terminal device.

S801: The network device receives the second capability information sent by the terminal device.

S802: The terminal device sends the first capability information to the network device.

The first capability information indicates a terminal transmission capability corresponding to at least one resource or resource group.

S803: The network device receives the first capability information sent by the terminal device.

S804: The network device determines that a first condition is satisfied, and determines uplink transmission scheduling information based on the first capability information.

The first condition indicates that the network device can obtain a resource-level or resource group-level transmission capability of the terminal device.

S805: The network device sends the uplink transmission scheduling information to the terminal device.

S806: The terminal device receives the uplink transmission scheduling information sent by the network device.

S807: The terminal device performs uplink transmission based on the uplink transmission scheduling information.

In the scenario 1, in this embodiment of this application, the terminal device sends the first capability information and the second capability information to the network device, so that during uplink transmission scheduling, the network device can jointly consider a terminal-level transmission capability limitation of the terminal device and a beam-level transmission capability limitation corresponding to a beam/beam group used for uplink transmission, and determine, based on the terminal-level transmission capability limitation and the beam-level transmission capability limitation, the uplink transmission scheduling information sent to the terminal device, to effectively avoid a problem of a transmission failure caused by scheduled uplink transmission exceeding a capability of the beam/beam group.

Scenario 2: A network device receives first indication information sent by a terminal device.

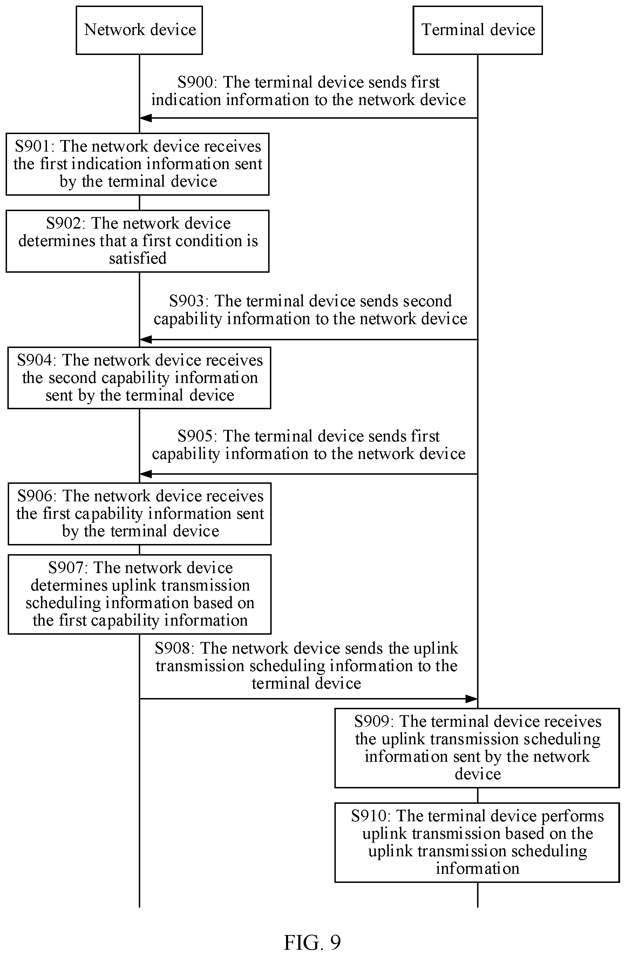

As shown in FIG. 9, based on the scenario 2, specific steps of communication between the terminal device and the network device in this embodiment of this application are as follows.

S900: The terminal device sends the first indication information to the network device.

The first indication information indicates that the terminal device supports reporting first capability information, and the first capability information indicates a terminal transmission capability corresponding to at least one resource or resource group.

S901: The network device receives the first indication information sent by the terminal device.

S902: The network device determines that a first condition is satisfied.

The first condition indicates that the network device can obtain a resource-level or resource group-level transmission capability of the terminal device.

In an example, in step S902, because the network device has received the first indication information, the network device may determine that the terminal device can support reporting the first capability information. In this case, the network device may wait for the terminal device to send the first capability information, and after receiving the first capability information, determine uplink transmission scheduling information based on the first capability information. Alternatively, if the network device receives, within first threshold duration after receiving the first indication information, no first capability information sent by the terminal device, the network device may apply to the terminal device for obtaining the first capability information. For example, assuming that the first threshold duration is 20 milliseconds, if the network device receives, within 20 milliseconds after receiving the first indication information, no first capability information sent by the terminal device, the network device may apply to the terminal device for obtaining the first capability information.

S903: The terminal device sends second capability information to the network device.

The second capability information indicates a transmission capability of the terminal device.

S904: The network device receives the second capability information sent by the terminal device.

S905: The terminal device sends the first capability information to the network device.

The first capability information indicates a terminal transmission capability corresponding to at least one resource or resource group.

S906: The network device receives the first capability information sent by the terminal device.

S907: The network device determines the uplink transmission scheduling information based on the first capability information.

S908: The network device sends the uplink transmission scheduling information to the terminal device.

S909: The terminal device receives the uplink transmission scheduling information sent by the network device.

S910: The terminal device performs uplink transmission based on the uplink transmission scheduling information.

In the scenario 2, in this embodiment of this application, the terminal device sends the first indication information to the network device, so that the network device can learn that the terminal device has a capability of supporting reporting the first capability information. Therefore, the network device may wait for the terminal device to report the first capability information, and determine, based on the first capability information, the uplink transmission scheduling information sent to the terminal device, to effectively avoid a problem of a transmission failure caused by scheduled uplink transmission exceeding a capability of a beam/beam group.

Scenario 3: A network device sends second indication information to a terminal device.

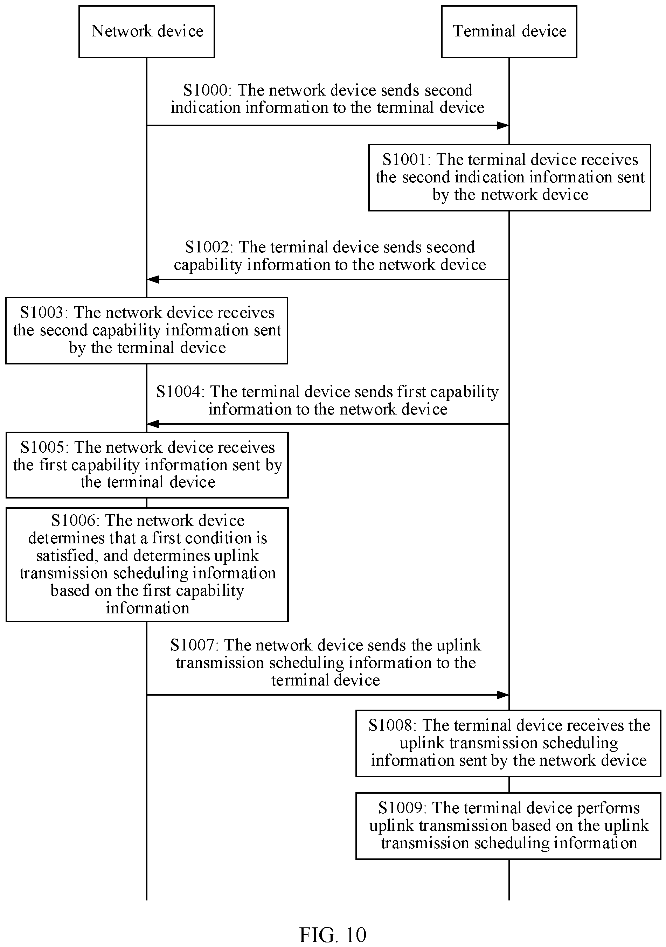

As shown in FIG. 10, based on the scenario 3, specific steps of communication between the terminal device and the network device in this embodiment of this application are as follows.

S1000: The network device sends the second indication information to the terminal device.

The second indication information indicates that the terminal device supports reporting first capability information, and the first capability information indicates a terminal transmission capability corresponding to at least one resource or resource group.

S1001: The terminal device receives the second indication information sent by the network device.

In an example, in step S1001, after receiving the second indication information sent by the network device, the terminal device may send the first capability information to the network device within second threshold duration or on another indicated sending occasion. For example, it is assumed that the second threshold duration is 10 milliseconds. After receiving the second indication information sent by the network device, the terminal device sends the first capability information to the network device within 10 milliseconds.

In an example, if the network device receives, within preset time, no first capability information sent by the terminal device, the network device may send the second indication information to the terminal device again.

S1002: The terminal device sends second capability information to the network device.

The second capability information indicates a transmission capability of the terminal device.

S1003: The network device receives the second capability information sent by the terminal device.

S1004: The terminal device sends the first capability information to the network device.

The first capability information indicates a terminal transmission capability corresponding to at least one resource or resource group.

S1005: The network device receives the first capability information sent by the terminal device.

S1006: The network device determines that a first condition is satisfied, and determines uplink transmission scheduling information based on the first capability information.

S1007: The network device sends the uplink transmission scheduling information to the terminal device.

S1008: The terminal device receives the uplink transmission scheduling information sent by the network device.

S1009: The terminal device performs uplink transmission based on the uplink transmission scheduling information.

In the scenario 3, in this embodiment of this application, the network device sends the second indication information to the terminal device, so that the terminal device can report the first capability information to the network device. Therefore, the network device may wait for the terminal device to report the first capability information, and determine, based on the first capability information, the uplink transmission scheduling information sent to the terminal device, to effectively avoid a problem of a transmission failure caused by scheduled uplink transmission exceeding a capability of a beam/beam group.

Scenario 4: A network device stores resource-level or resource group-level transmission capability information used by a terminal device for uplink transmission.

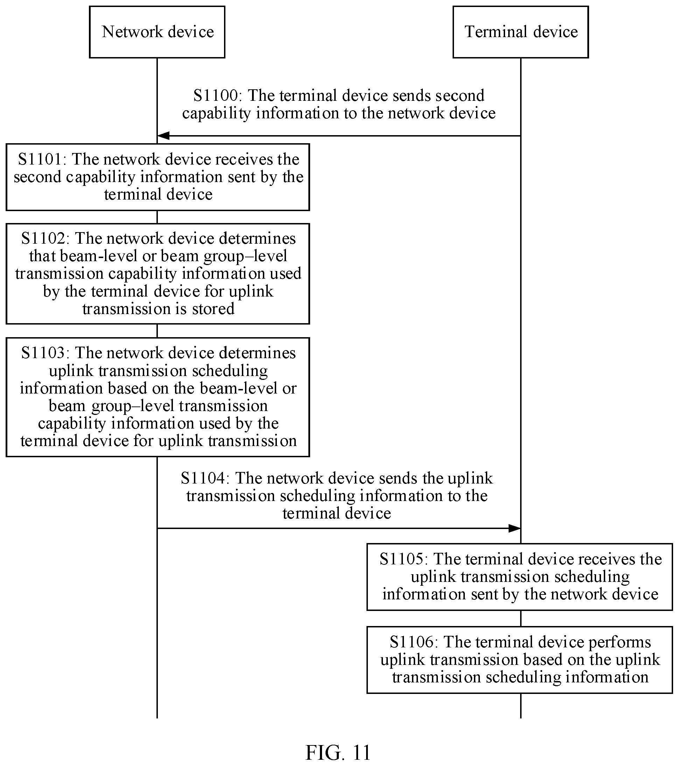

As shown in FIG. 11, based on the scenario 4, specific steps of communication between the terminal device and the network device in this embodiment of this application are as follows.

S1100: The terminal device sends second capability information to the network device.

The second capability information indicates a transmission capability of the terminal device.

S1101: The network device receives the second capability information sent by the terminal device.

S1102: The network device determines that the resource-level or resource group-level transmission capability information used by the terminal device for uplink transmission is stored.

S1103: The network device determines uplink transmission scheduling information based on the resource-level or resource group-level transmission capability information used by the terminal device for uplink transmission.

S1104: The network device sends the uplink transmission scheduling information to the terminal device.

S1105: The terminal device receives the uplink transmission scheduling information sent by the network device.

S1106: The terminal device performs uplink transmission based on the uplink transmission scheduling information.

In the scenario 4, in this embodiment of this application, during uplink transmission scheduling, the network device can jointly consider, based on the stored resource-level or resource group-level transmission capability information used by the terminal device for uplink transmission, a terminal-level transmission capability limitation of the terminal device and a beam-level transmission capability limitation corresponding to a beam/beam group used for uplink transmission, and determine, based on the terminal-level transmission capability limitation and the beam-level transmission capability limitation, the uplink transmission scheduling information sent to the terminal device, to effectively avoid a problem of a transmission failure caused by scheduled uplink transmission exceeding a capability of the beam/beam group.

Scenario 5: A network device determines that a first condition is not satisfied, and determines uplink transmission scheduling information based on second capability information.

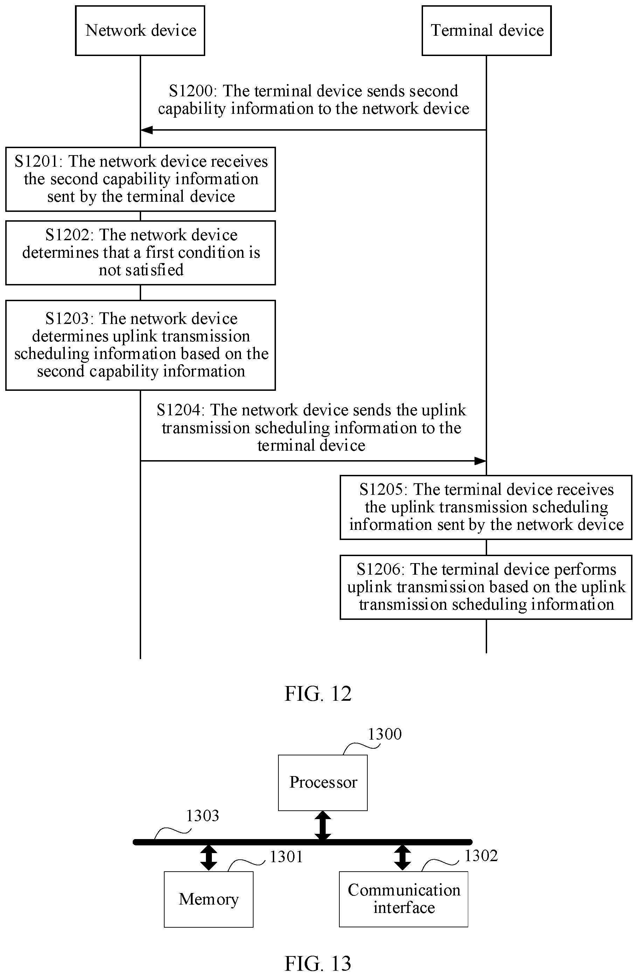

As shown in FIG. 12, based on the scenario 5, specific steps of communication between a terminal device and the network device in this embodiment of this application are as follows.

S1200: The terminal device sends the second capability information to the network device.

The second capability information indicates a transmission capability of the terminal device.

S1201: The network device receives the second capability information sent by the terminal device.

S1202: The network device determines that a first condition is not satisfied.

The first condition indicates that the network device can obtain a resource-level or resource group-level transmission capability of the terminal device.

S1203: The network device determines the uplink transmission scheduling information based on the second capability information.

S1204: The network device sends the uplink transmission scheduling information to the terminal device.

S1205: The terminal device receives the uplink transmission scheduling information sent by the network device.

S1206: The terminal device performs uplink transmission based on the uplink transmission scheduling information.

In the scenario 5, in this embodiment of this application, when the network device cannot obtain the transmission capability of the resource or the resource group used by the terminal device for uplink transmission, the network device can determine, based on the second capability information obtained from the terminal device, the uplink transmission scheduling information sent to the terminal device, so that the uplink transmission scheduling information can be quickly and effectively determined.

It may be understood that the examples in embodiments of this application are merely intended to help a person skilled in the art understand embodiments of this application, but are not intended to limit embodiments of this application to a specific scenario shown in the examples. It is clear that a person skilled in the art can make various equivalent modifications or changes based on the examples provided in embodiments of this application, and such modifications or changes also fall within the scope of embodiments of this application.

It may be further understood that the foregoing steps in embodiments of this application are merely examples for description, and are not strictly limited thereto. In addition, sequence numbers of the foregoing steps do not mean an execution sequence. The execution sequence of the processes should be determined based on functions and internal logic of the processes, and should not constitute any limitation on the implementation processes of embodiments of this application.

It may be further understood that, some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names in embodiments of this application, for example, a first message, do not limit the protection scope of embodiments of this application.

According to the foregoing descriptions of the solutions in this application, it may be understood that, to implement the foregoing functions, the foregoing devices include corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

Based on the foregoing embodiments, as shown in FIG. 13, this application provides a communication apparatus. The apparatus includes a processor 1300, a memory 1301, and a communication interface 1302.

The processor 1300 is responsible for managing a bus architecture and general processing. The memory 1301 may store data used when the processor 1300 performs an operation. The transceiver communication interface 1302 is configured to receive and send data under control of the processor 1300 to perform data communication with the memory 1301.

The processor 1300 may be a central processing unit (central processing unit, CPU), a network processor (network processor, NP), or a combination of a CPU and an NP. The processor 1300 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The memory 1301 may include: any medium that can store program code, such as a USB flash drive, a removable hard disk, a read-only memory (read-only memory, ROM), a random access memory (random access memory, RAM), a magnetic disk, or an optical disc.

The processor 1300, the memory 1301, and the communication interface 1302 are connected to each other. Optionally, the processor 1300, the memory 1301, and the communication interface 1302 may be connected to each other via a bus 1303. The bus 1303 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

Specifically, when the communication apparatus is a terminal device, the processor 1300 is configured to read a program in the memory 1301 and perform the method processes performed by the terminal device in S700 to S702 shown in FIG. 7, perform the method processes performed by the terminal device in S800 to S807 shown in FIG. 8, perform the method processes performed by the terminal device in S900 to S910 shown in FIG. 9, perform the method processes performed by the terminal device in S1000-S1009 shown in FIG. 10, perform the method processes performed by the terminal device in S1100 to S1106 shown in FIG. 11, or perform the method processes performed by the terminal device in S1200 to S1206 shown in FIG. 12.

Specifically, when the communication apparatus is a network device, the processor 1300 is configured to read a program in the memory 1301 and perform the method processes performed by the network device in S700 to S702 shown in FIG. 7, perform the method processes performed by the network device in S800 to S807 shown in FIG. 8, perform the method processes performed by the network device in S900 to S910 shown in FIG. 9, perform the method processes performed by the network device in S1000-S1009 shown in FIG. 10, perform the method processes performed by the network device in S1100 to S1106 shown in FIG. 11, or perform the method processes performed by the network device in S1200 to S1206 shown in FIG. 12.

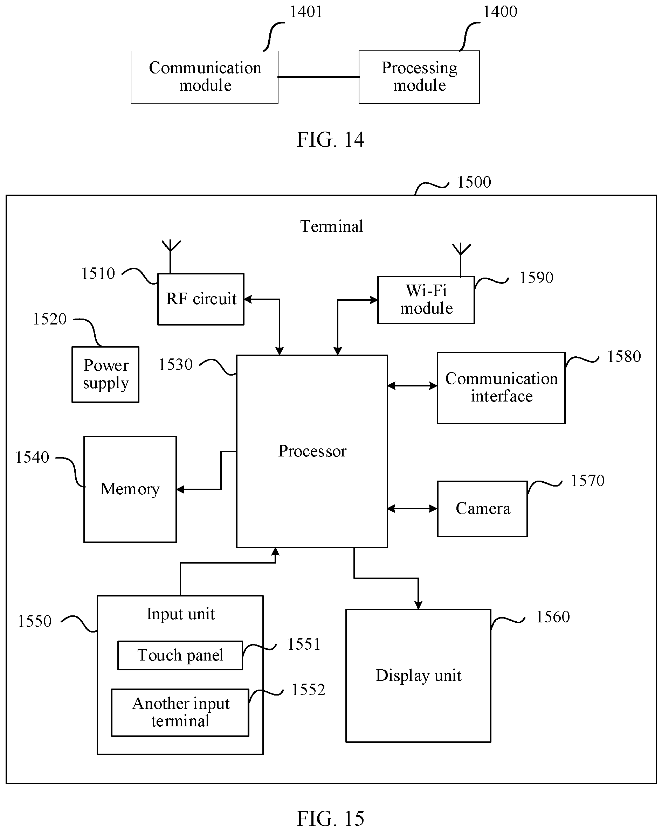

As shown in FIG. 14, an embodiment of this application provides a communication apparatus. The apparatus includes a processing module 1400 and a communication module 1401.

When the apparatus is a terminal device, in an optional manner, the processing module 1400 and the communication module 1401 are configured to perform the following content.

The processing module 1400 is configured to send first capability information to a network device by using the communication module 1401, where the first capability information indicates a terminal transmission capability corresponding to at least one resource or resource group.

The communication module 1401 is configured to receive uplink transmission scheduling information sent by the network device, where the uplink transmission scheduling information is determined by the network device based on the first capability information.

The processing module 1400 is further configured to perform uplink transmission based on the uplink transmission scheduling information.

When the apparatus is a network device, in an optional manner, the processing module 1400 and the communication module 1401 are configured to perform the following content.

The communication module 1401 is configured to receive the first capability information sent by the terminal device.

The processing module 1400 is configured to determine uplink transmission scheduling information based on the first capability information, and send the uplink transmission scheduling information to the terminal device by using the communication module 1401.

The communication module 1401 is further configured to receive an uplink signal transmitted by the terminal device based on the uplink transmission scheduling information.

When the apparatus is a network device, in another optional manner, the processing module 1400 and the communication module 1401 are configured to perform the following content.

The processing module 1400 is configured to determine uplink transmission scheduling information based on first capability information when a first condition is satisfied, where the first capability information indicates a resource-level or resource group-level transmission capability of a terminal device, and the first condition indicates that the network device can obtain the resource-level or resource group-level transmission capability of the terminal device.

The communication module 1401 is configured to send the uplink transmission scheduling information to the terminal device.

It should be noted that the communication module 1401 may include different communication modules, which are respectively corresponding to different communication interfaces.

The communication apparatus in the foregoing embodiments may be a terminal device, a chip used in a terminal device, or another combined part, component, or the like that can implement a function of the terminal device. When the apparatus is a terminal device, a transceiver may be a transmitter and a receiver, or an integrated transceiver, and may include an antenna, a radio frequency circuit, and the like. A processing unit may be a processor, for example, a baseband chip. When the apparatus is a component having a function of the terminal device, a transceiver unit may be a radio frequency unit. A processing module may be a processor. When the communication apparatus is a chip system, a transceiver unit may be an input/output interface of the chip system. A processing unit may be a processor of the chip system, for example, a central processing unit (central processing unit, CPU).

For detailed descriptions of functions or operations performed by the terminal device provided in this application, refer to the steps performed by the terminal device in the method embodiments of this application.

Details are not described herein again.

For detailed descriptions of functions or operations performed by the network device provided in this application, refer to the steps performed by the network device in the method embodiments of this application. Details are not described herein again.

Based on the same concept, an embodiment of this application provides a terminal device. The terminal device may be a scheduling terminal device and/or a sending terminal device. As shown in FIG. 15, a terminal 1500 includes components such as a radio frequency (radio frequency, RF) circuit 1510, a power supply 1520, a processor 1530, a memory 1540, an input unit 1550, a display unit 1560, a camera 1570, a communication interface 1580, and a wireless fidelity (wireless fidelity, Wi-Fi) module 1590. A person skilled in the art may understand that a structure of the terminal shown in FIG. 15 does not constitute a limitation on the terminal. The terminal provided in this embodiment of this application may include more or fewer components than those shown in the figure, some components may be combined, or different component arrangements may be used.

The following describes the components in the terminal 1500 in detail with reference to FIG. 15.

The RF circuit 1510 may be configured to receive and send data in a communication or call process. Particularly, after receiving downlink data from a base station, the RF circuit 1510 sends the downlink data to the processor 1530 for processing. In addition, the RF circuit 1510 sends to-be-sent uplink data to the base station. Generally, the RF circuit 1510 includes but is not limited to an antenna, at least one amplifier, a transceiver, a coupler, a low noise amplifier (low noise amplifier, LNA), a duplexer, and the like.

In addition, the RF circuit 1510 may further communicate with a network and another terminal through wireless communication. The wireless communication may use any communication standard or protocol, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (Short Message Service, SMS), and the like.

A Wi-Fi technology is a short-distance wireless transmission technology. The terminal 1500 may be connected to an access point (access point, AP) by using the Wi-Fi module 1590, to access a data network. The Wi-Fi module 1590 may be configured to receive and send data in a communication process.

The terminal 1500 may be physically connected to another terminal through the communication interface 1580. Optionally, the communication interface 1580 is connected to a communication interface of the another terminal via a cable, to implement data transmission between the terminal 1500 and the another terminal.

The terminal 1500 can implement a communication service and send an information message to another contact. Therefore, the terminal 1500 needs to have a data transmission function. In other words, the terminal 1500 needs to include a communication module. Although FIG. 15 shows communication modules such as the RF circuit 1510, the Wi-Fi module 1590, and the communication interface 1580, it may be understood that the terminal 1500 includes at least one of the foregoing components or another communication module (for example, a Bluetooth module) configured to implement communication, to transmit data.

The memory 1540 may be configured to store a software program and a module. The processor 1530 executes various function applications of the terminal 1500 and data processing by running the software program and the module that are stored in the memory 1540. After the processor 1530 executes program code in the memory 1540, some or all processes in embodiments of this application may be implemented.

Optionally, the memory 1540 may mainly include a program storage area and a data storage area. The program storage area may store an operating system, various application programs (for example, a communication application), a facial recognition module, and the like. The data storage area may store data (for example, multimedia files such as various pictures and video files, and a facial message template) created based on usage of the terminal, and the like.

**In** addition, the memory 1540 may include a high-speed random access memory, and may further include a non-volatile memory, for example, at least one magnetic disk storage device, a flash memory device, or another volatile solid-state storage device.

The input unit 1550 may be configured to receive digital or a character message entered by a user, and generate a button signal input related to user setting and function control of the terminal 1500.

Optionally, the input unit 1550 may include a touch panel 1551 and another input terminal 1552.

The processor 1530 is a control center of the terminal 1500, is connected to all components by using various interfaces and lines, and executes various functions of the terminal 1500 and processes data by running or executing the software program and/or the module stored in the memory 1540 and invoking data stored in the memory 1540. Therefore, a plurality of services based on the terminal are implemented.

Optionally, the processor 1530 may include one or more processing units. Optionally, the processor 1530 may integrate an application processor and a modem processor. The application processor mainly processes an operating system, a user interface, an application program, and the like. The modem processor mainly processes wireless communication. It may be understood that the modem processor may not alternatively be integrated into the processor 1530.

The camera 1570 is configured to implement a photographing function of the terminal 1500, to take a picture or shoot a video.

The terminal 1500 further includes the power supply 1520 (such as a battery) configured to supply power to the components.

Although not shown, the terminal 1500 may further include at least one sensor, an audio circuit, and the like. Details are not described herein again.

The memory 1540 may store program code that is the same as that of foregoing communication apparatus. When the program code is executed by the processor 1530, the processor 1530 is enabled to implement all functions of the processing module 1400.

In some possible implementations, aspects of the communication method provided in embodiments of this application may be further implemented in the form of a program product. The program product includes program code. When the program code is run on a computer device, the program code is used for enabling the computer device to perform the steps in the communication method according to various example implementations of this application described in this specification.

The program product may use any combination of one or more readable media. The readable medium may be a readable signal medium or a readable storage medium. The readable storage medium may be, for example, but is not limited to, an electrical, a magnetic, an optical, an electromagnetic, an infrared, or a semiconductor system, apparatus, or device, or any combination thereof. More specific examples (non-exhaustive list) of the readable storage medium in embodiments of this application include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any appropriate combination thereof.

The program product used for terminal device capability negotiation according to an implementation of embodiments of this application may use a portable compact disk read-only memory (CD-ROM), include program code, and may be run on a server device. However, the program product in embodiments of this application is not limited thereto. In this specification, the readable storage medium may be any tangible medium including or storing a program. The program may be transmitted as a message, or used by or in combination with an apparatus or a device.

The readable signal medium may include a data signal propagated in a baseband or as a part of a carrier, where the data signal carries readable program code. The propagated data signal may be in various forms, including, but not limited to, an electromagnetic signal, an optical signal, or any suitable combination thereof. The readable signal medium may alternatively be any readable medium other than the readable storage medium. The readable medium may send, propagate, or transmit a program for use by or for use in combination with a recurrent network action system, apparatus, or device.

The program code included on the readable medium may be transmitted using any suitable medium, including, but not limited to, wireless, wired, optical cable, RF, or any suitable combination thereof.

The program code for performing operations of embodiments of this application may be written in any combination of one or more program design languages. The program design languages include object-oriented program design languages such as Java and C++, and further include a conventional procedural program design language such as a "C" language or a similar program design language. The program code may be executed entirely on a user computing device, partially on user equipment, as a separate software package, partially on a user computing device, partially on a remote computing device, or entirely on a remote computing device or server. In a situation involving a remote computing device, the remote computing device may be connected to a user computing device through any kind of network, including a local area network (LAN) or a wide area network (WAN), or may be connected to an external computing device.

For the communication method, embodiment of this application further provides a computing device readable storage medium, so that content is not lost after a power failure. The storage medium stores a software program including program code. When the program code is run on a computing device, any solution for communication method in the foregoing embodiments of this application can be implemented when the software program is read and executed by one or more processors.

The foregoing describes this application with reference to block diagrams and/or flowcharts that show the method, the apparatus (system), and/or the computer program product according to embodiments of this application. It should be understood that a block in the block diagrams and/or the flowcharts and a combination of blocks in the block diagrams and/or the flowcharts may be implemented by using computer program instructions. These computer program instructions may be provided to a processor of a general-purpose computer or a dedicated computer, and/or other programmable data processing apparatuses to generate a machine such that the instructions executed by the computer processor and/or other programmable data processing apparatuses create a method for implementing a function/action specified in the block diagrams and/or flowcharts.

Correspondingly, this application may alternatively be implemented by using hardware and/or software (including firmware, resident software, microcode, and the like). Further, in this application, the form of a computer program product on a computer-usable or computer-readable storage medium may be used, and the computer program product has computer-usable or computer-readable program code implemented in the medium for use by or uses in combination with an instruction execution system. **In** the context of this application, the computer-usable or the computer-readable medium may be any medium that may include, store, communicate, transmit, or transfer a program, for use by or use in combination with an instruction execution system, apparatus, or device.

Although this application is described with reference to specific features and embodiments thereof, apparently, various modifications and combinations may be made without departing from the spirit and scope of this application. Correspondingly, this specification and the accompanying drawings are merely examples of this application defined by the appended claims, and are considered as having covered any of and all of modifications, variations, combinations, or equivalents within the scope of this application. It is clear that a person skilled in the art can make various modifications and variations to this application without departing from the scope of this application. **In** this case, provided that the modifications and variations made to this application fall within the scope of the claims of this application and equivalent techniques thereof, this application is also intended to cover such modifications and variations.

## Claims

1. A communication method, wherein the method comprises:

   sending, by a terminal device, first capability information to a network device, wherein the first capability information indicates a terminal transmission capability corresponding to at least one resource or resource group;
   receiving, by the terminal device, uplink transmission scheduling information sent by the network device, wherein the uplink transmission scheduling information is determined by the network device based on the first capability information; and
   performing, by the terminal device, uplink transmission based on the uplink transmission scheduling information.

2. The method according to claim 1, wherein the first capability information is carried in a measurement report sent by the terminal device to the network device, and the measurement report further comprises a measurement result of the at least one resource or resource group.

3. The method according to claim 1 or 2, wherein the at least one resource comprises a first resource; and

a terminal transmission capability corresponding to the first resource comprises one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

4. The method according to any one of claims 1 to 3, wherein the at least one resource group comprises a first resource group; and
a terminal transmission capability corresponding to the first resource group comprises one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

5. The method according to any one of claims 1 to 4, wherein the method further comprises:
sending, by the terminal device, second capability information to the network device, wherein the second capability information indicates a transmission capability of the terminal device.

6. The method according to claim 5, wherein the second capability information comprises one or more of the following:
a maximum quantity of codewords that can be transmitted by the terminal device, whether the terminal device supports transmitting two codewords, whether the terminal device supports performing simultaneous transmission by using a plurality of beams, whether the terminal device can perform space division transmission by using a plurality of beams, whether the terminal device supports performing frequency division transmission by using a plurality of beams, an uplink transmission mode supported by the terminal device, and whether the terminal device supports performing transmission by using two timing advances.

7. The method according to any one of claims 1 to 6, wherein before the sending, by a terminal device, first capability information to a network device, the method further comprises:
sending, by the terminal device, first indication information to the network device, wherein the first indication information indicates that the terminal device supports reporting the first capability information.

8. The method according to claim 7, wherein the first indication information is comprised in the second capability information.

9. The method according to any one of claims 1 to 8, wherein before the sending, by a terminal device, first capability information to a network device, the method further comprises:
receiving, by the terminal device, second indication information sent by the network device, wherein the second indication information indicates the terminal device to report the first capability information.

10. A communication method, wherein the method comprises:

    receiving, by a network device, first capability information sent by a terminal device, wherein the first capability information indicates a terminal transmission capability corresponding to at least one resource or resource group;
    determining, by the network device, uplink transmission scheduling information based on the first capability information;
    sending, by the network device, the uplink transmission scheduling information to the terminal device; and
    receiving, by the network device, an uplink signal transmitted by the terminal device based on the uplink transmission scheduling information.

11. The method according to claim 10, wherein the first capability information is carried in a measurement report sent by the terminal device to the network device, and the measurement report further comprises a measurement result of the at least one resource or resource group.

12. The method according to claim 10 or 11, wherein the at least one resource comprises a first resource; and
a terminal transmission capability corresponding to the first resource comprises one or more of the following:
a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

13. The method according to any one of claims 10 to 12, wherein the at least one resource group comprises a first resource group; and

a terminal transmission capability corresponding to the first resource group comprises one or more of the following:

a maximum quantity of codewords that can be transmitted, whether transmission of two codewords is supported, whether simultaneous transmission can be performed by using a plurality of beams, whether space division transmission can be performed by using a plurality of beams, whether frequency division transmission can be performed by using a plurality of beams, a supported uplink transmission mode, and whether transmission performed by using two timing advances is supported.

14. The method according to any one of claims 10 to 13, wherein the method further comprises:
receiving, by the network device, second capability information sent by the terminal device, wherein the second capability information indicates a transmission capability of the terminal device.

15. The method according to claim 14, wherein the second capability information comprises one or more of the following:
a maximum quantity of codewords that can be transmitted by the terminal device, whether the terminal device supports transmitting two codewords, whether the terminal device supports performing simultaneous transmission by using a plurality of beams, whether the terminal device can perform space division transmission by using a plurality of beams, whether the terminal device supports performing frequency division transmission by using a plurality of beams, an uplink transmission mode supported by the terminal device, and whether the terminal device supports performing transmission by using two timing advances.

16. The method according to any one of claims 10 to 15, wherein before the receiving, by a network device, first capability information sent by a terminal device, the method further comprises:
receiving, by the network device, first indication information sent by the terminal device, wherein the first indication information indicates that the terminal device supports reporting the first capability information.

17. The method according to claim 16, wherein the first indication information is comprised in the second capability information.

18. The method according to any one of claims 10 to 17, wherein before the receiving, by a network device, first capability information sent by a terminal device, the method further comprises:
sending, by the network device, second indication information to the terminal device, wherein the second indication information indicates the terminal device to report the first capability information.

19. The method according to any one of claims 10 to 18, wherein the determining, by the network device, uplink transmission scheduling information based on the first capability information comprises:

when determining that a first condition is satisfied, determining, by the network device, the uplink transmission scheduling information based on the first capability information, wherein the first condition comprises one or a combination of the following:

the terminal device supports reporting the first capability information;
the network device configures the terminal device to report the first capability information;
the terminal device reports the first capability information; and
the first capability information comprises a terminal transmission capability corresponding to an uplink transmission beam corresponding to the uplink transmission scheduling information.

20. A communication method, wherein the method comprises:

sending, by a terminal device, first capability information to a network device, wherein the first capability information indicates a terminal transmission capability corresponding to at least one resource or resource group; and
determining, by the network device, uplink transmission scheduling information based on the first capability information, and sending the uplink transmission scheduling information to the terminal device.

21. A communication system, wherein the communication system comprises a terminal device and a network device, the terminal device is configured to perform the method according to any one of claims 1 to 9, and the network device is configured to perform the method according to any one of claims 10 to 19.

22. A communication apparatus, wherein the communication apparatus comprises a processing module and a communication module;

the processing module is configured to send first capability information to a network device by using the communication module, wherein the first capability information indicates a terminal transmission capability corresponding to at least one resource or resource group;
the communication module is configured to receive uplink transmission scheduling information sent by the network device, wherein the uplink transmission scheduling information is determined by the network device based on the first capability information; and
the processing module is further configured to perform uplink transmission based on the uplink transmission scheduling information.

23. A communication apparatus, wherein the communication apparatus comprises a processing module and a communication module;

the communication module is configured to receive first capability information sent by a terminal device;
the processing module is configured to determine uplink transmission scheduling information based on the first capability information, and send the uplink transmission scheduling information to the terminal device by using the communication module; and
the communication module is further configured to receive an uplink signal transmitted by the terminal device based on the uplink transmission scheduling information.

24. A communication apparatus, comprising a processor and a recorder, wherein the recorder is configured to record one or more computer programs, the one or more computer programs comprise computer-executable instructions, and when the communication apparatus runs, the processor executes the one or more computer programs recorded by the recorder, to enable the communication apparatus to perform the method according to any one of claims 1 to 9, or enable the communication apparatus to perform the method according to any one of claims 10 to 19.

25. A computer-readable recording medium, wherein the computer-readable recording medium is configured to record a computer program, and when the computer program is run on a computer, the computer is enabled to perform the method according to any one of claims 1 to 9, or the computer is enabled to perform the method according to any one of claims 10 to 19.

26. A computer program product, wherein the computer program product comprises a computer program, and when the computer program is run on a computer, the computer is enabled to perform the method according to any one of claims 1 to 9, or the computer is enabled to perform the method according to any one of claims 10 to 19.

Beam 1

Antenna panel 1

Antenna panel 2

Beam 2

Terminal device

FIG. 1

Network device
210

Terminal device
220

FIG. 2

FIG. 3

FIG. 4

$$\begin{pmatrix} 1 \\ -1 \end{pmatrix}$$

Panel (panel) 1

$$\begin{pmatrix} 1 \\ -1 \end{pmatrix}$$

Port (path) 1

Layer (layer) 1

Port (path) 2

xj

Panel (panel) 2

$$\begin{pmatrix} 1 \\ -j \end{pmatrix}$$

FIG. 5

B: Frequency domain bandwidth allocated by a gNB for UE

Last B/2

First B/2

DAC

DAC

Panel (panel) 1

Port (path) 1

Layer (layer) 1

Port (path) 2

$e^{j2\pi (B/2)}$

DAC

DAC

$e^{j2\pi (B/2)}$

Panel (panel) 2

Last B/2

First B/2

FIG. 6

Network device

Terminal device

S700: The terminal device sends first capability information to the network device

S701: The network device determines uplink transmission scheduling information based on the first capability information

S702: The network device sends the uplink transmission scheduling information to the terminal device

FIG. 7

| Network device | | Terminal device |
|---|---|---|

S800: The terminal device sends second capability information to the network device

S801: The network device receives the second capability information sent by the terminal device

S802: The terminal device sends first capability information to the network device

S803: The network device receives the first capability information sent by the terminal device

S804: The network device determines that a first condition is satisfied, and determines uplink transmission scheduling information based on the first capability information

S805: The network device sends the uplink transmission scheduling information to the terminal device

S806: The terminal device receives the uplink transmission scheduling information sent by the network device

S807: The terminal device performs uplink transmission based on the uplink transmission scheduling information

FIG. 8

Network device

Terminal device

S900: The terminal device sends first indication information to the network device

S901: The network device receives the first indication information sent by the terminal device

S902: The network device determines that a first condition is satisfied

S903: The terminal device sends second capability information to the network device

S904: The network device receives the second capability information sent by the terminal device

S905: The terminal device sends first capability information to the network device

S906: The network device receives the first capability information sent by the terminal device

S907: The network device determines uplink transmission scheduling information based on the first capability information

S908: The network device sends the uplink transmission scheduling information to the terminal device

S909: The terminal device receives the uplink transmission scheduling information sent by the network device

S910: The terminal device performs uplink transmission based on the uplink transmission scheduling information

FIG. 9

FIG. 10

```
┌─────────────────┐                              ┌─────────────────┐
│ Network device  │                              │ Terminal device │
└─────────────────┘                              └─────────────────┘
         │                                                │
         │   S1100: The terminal device sends second      │
         │   capability information to the network device  │
         │◄───────────────────────────────────────────────│
┌────────────────────────────────┐                        │
│ S1101: The network device       │                       │
│ receives the second capability  │                       │
│ information sent by the         │                        │
│ terminal device                 │                       │
└────────────────────────────────┘                        │
┌────────────────────────────────┐                        │
│ S1102: The network device       │                       │
│ determines that beam-level or   │                        │
│ beam group–level transmission   │                       │
│ capability information used by   │                       │
│ the terminal device for uplink   │                      │
│ transmission is stored           │                      │
└────────────────────────────────┘                        │
┌────────────────────────────────┐                        │
│ S1103: The network device       │                       │
│ determines uplink transmission  │                        │
│ scheduling information based on  │                       │
│ the beam-level or beam group–    │                       │
│ level transmission capability    │                       │
│ information used by the terminal │                       │
│ device for uplink transmission   │                      │
└────────────────────────────────┘                        │
         │   S1104: The network device sends the uplink    │
         │   transmission scheduling information to the     │
         │   terminal device                               │
         │────────────────────────────────────────────────►│
         │                        ┌────────────────────────────────┐
         │                        │ S1105: The terminal device      │
         │                        │ receives the uplink transmission│
         │                        │ scheduling information sent by  │
         │                        │ the network device              │
         │                        └────────────────────────────────┘
         │                        ┌────────────────────────────────┐
         │                        │ S1106: The terminal device      │
         │                        │ performs uplink transmission    │
         │                        │ based on the uplink transmission│
         │                        │ scheduling information          │
         │                        └────────────────────────────────┘
         │                                                │
```

FIG. 11

| Network device | | Terminal device |
|---|---|---|

S1200: The terminal device sends second capability information to the network device

S1201: The network device receives the second capability information sent by the terminal device

S1202: The network device determines that a first condition is not satisfied

S1203: The network device determines uplink transmission scheduling information based on the second capability information

S1204: The network device sends the uplink transmission scheduling information to the terminal device

S1205: The terminal device receives the uplink transmission scheduling information sent by the network device

S1206: The terminal device performs uplink transmission based on the uplink transmission scheduling information

FIG. 12

1300

Processor

1303

1301

1302

Memory

Communication interface

FIG. 13

1401           1400

| Communication module | — | Processing module |

FIG. 14

1500

Terminal

1510   RF circuit       Wi-Fi module   1590

1520   Power supply

1530   Processor      Communication interface   1580

1540   Memory

         Camera   1570

1550   Input unit

Touch panel   1551

Another input terminal   1552

Display unit   1560

FIG. 15

# EP 4 557 788 A1

| | INTERNATIONAL SEARCH REPORT | International application No. |
|---|---|---|
| | | **PCT/CN2023/104972** |

| A. | CLASSIFICATION OF SUBJECT MATTER |
|---|---|
| | H04W8/24(2009.01)i; H04W72/12(2023.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, DWPI, USTXT, EPTXT, JPTXT, WOTXT, CNKI, IEEE, 3GPP: 终端, 网络设备, 基站, 能力, 资源, 波束, 调度, 上行, 上报, 传输模式, 测量, 最大码字数, 定时提前量, terminal, network device, BS, base station, ability, capability, source, beam, uplink, transmission, escalation.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112789926 A (BEIJING XIAOMI MOBILE SOFTWARE CO., LTD.) 11 May 2021 (2021-05-11) description, paragraphs [0039]-[0206], and figures 1-13 | 1-4, 7, 9-13, 16, 18-26 |
| Y | CN 112789926 A (BEIJING XIAOMI MOBILE SOFTWARE CO., LTD.) 11 May 2021 (2021-05-11) description, paragraphs [0039]-[0206], and figures 1-13 | 5-6, 8, 14-15, 17 |
| Y | CN 109089322 A (VIVO COMMUNICATION TECHNOLOGY CO., LTD.) 25 December 2018 (2018-12-25) description, paragraphs [0046]-[0069], and figure 2 | 5-6, 8, 14-15, 17 |
| A | CN 107996031 A (CLOUDMINDS (SHENZHEN) ROBOTICS SYSTEMS CO., LTD.) 04 May 2018 (2018-05-04) entire document | 1-26 |
| A | CN 110912665 A (HUAWEI TECHNOLOGIES CO., LTD.) 24 March 2020 (2020-03-24) entire document | 1-26 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 September 2023** | **28 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

38

**INTERNATIONAL SEARCH REPORT**

| International application No. |
|---|
| **PCT/CN2023/104972** |

**C.     DOCUMENTS CONSIDERED TO BE RELEVANT**

| Category* | Citation of document, with indication, where appropriate, of the relevant passages | Relevant to claim No. |
|---|---|---|
| A | CN 113271671 A (DATANG MOBILE COMMUNICATIONS EQUIPMENT CO., LTD.) 17 August 2021 (2021-08-17) <br> entire document | 1-26 |
| A | US 2022174509 A1 (ELECTRONICS & TELECOMMUNICATIONS RESEARCH INSTITUTE) 02 June 2022 (2022-06-02) <br> entire document | 1-26 |

Form PCT/ISA/210 (second sheet) (July 2022)

INTERNATIONAL SEARCH REPORT
Information on patent family members

International application No.

**PCT/CN2023/104972**

| Patent document cited in search report | | | Publication date (day/month/year) | Patent family member(s) | | | Publication date (day/month/year) |
|---|---|---|---|---|---|---|---|
| CN | 112789926 | A | 11 May 2021 | WO | 2022147675 | A1 | 14 July 2022 |
| CN | 109089322 | A | 25 December 2018 | CN | 109089322 | B | 08 January 2021 |
| CN | 107996031 | A | 04 May 2018 | US | 2020029347 | A1 | 23 January 2020 |
| | | | | US | 11096197 | B2 | 17 August 2021 |
| | | | | JP | 2020526049 | A | 27 August 2020 |
| | | | | JP | 6934952 | B2 | 15 September 2021 |
| | | | | WO | 2018176501 | A1 | 04 October 2018 |
| | | | | EP | 3598828 | A1 | 22 January 2020 |
| CN | 110912665 | A | 24 March 2020 | WO | 2020057383 | A1 | 26 March 2020 |
| | | | | CN | 110912665 | B | 20 April 2021 |
| CN | 113271671 | A | 17 August 2021 | | None | | |
| US | 2022174509 | A1 | 02 June 2022 | KR | 20220077890 | A | 09 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210972078